# EUROPEAN PATENT APPLICATION

(11) **EP 3 275 791 A1**
(43) Date of publication of application: **31.01.2018**
(21) Application number: 15886427.2
(22) Date of filing: 17.07.2015
(51) Int. Cl.: B65B 9/04, B65B 65/00, G06F 3/041, G09G 5/00

(54) **MANUFACTURING APPARATUS**

(30) Priority: 23.03.2015 JP 2015059263
(71) Applicant: CKD Corporation, Komaki-shi, Aichi 485-8551 (JP)
(72) Inventor: KAMIOKA Yosuke, Komaki-shi Aichi 485-8551 (JP)
(74) Representative: Winter, Brandl, Fürniss, Hübner, Röss, Kaiser, Polte - Partnerschaft mbB
(86) International application number: PCT/JP2015/070575
(87) International publication number: WO 2016/151875

(57) **Abstract**

A manufacturing apparatus is configured such that a circumference of a manufacturing unit is covered by a cover, with a view to enhancing the usability and the safety. A manufacturing apparatus 10 includes a manufacturing unit 11 and a cover 71 configured to cover a circumference of the manufacturing unit 11. The cover 71 includes a transparent panel main body 74 that causes the manufacturing unit 11 to be visible from outside. The panel main body 74 is provided with an entry detection sensor 81 that is formed by a transparent thin film and that is configured to detect an entry by a contact or an approach and to output information regarding a position where the entry is detected, with a liquid crystal panel 82 or the like that is configured to display an image on the panel main body 74, and with a control device 85 that is configured to obtain information input from the entry detection sensor 81 and to control the liquid crystal panel 82 or the like. In response to a predetermined entry to the entry detection sensor 81, the control device 85 controls the liquid crystal panel 82 or the like such as to display an image in a position of the predetermined entry to the panel main body 74 or the like.

## Description

### Technical Field

The present disclosure relates to a manufacturing apparatus including a manufacturing unit configured to manufacture any of various products.

### Background

By taking into account the hygiene, the circumference of a manufacturing unit configured to manufacture any of various products, such as a PTP sheet, a substrate or a cosmetic product, may be covered by a cover (housing) (as described in, for example, Patent Literature 1). For the purpose of operating the manufacturing unit from outside of the cover and checking the status of the manufacturing unit from outside of the cover, the manufacturing unit may be provided outside of the cover, with a display unit configured to display a predetermined image (for example, an image indicating the status of the manufacturing unit or an operation image including buttons and icons) and with an input unit configured to enter information into a control unit of the manufacturing unit. For example, a touch panel including, for example, a liquid crystal panel and a touch sensor may be used as the display unit and the input unit.

A system that fixes the display unit and the like to an outer surface of the cover (stationary type) or a system that makes the display unit and the like movable along an outer surface of the cover (movable type) may be employed to provide the display unit and the input unit outside of the cover. In the system of the movable type, for example, the display unit and the like may be suspended via a predetermined arm to a slide rail provided horizontally along the outer surface of the cover, such as to be movable along the slide rail.

### Citation List

### Patent Literature

PTL 1: JP 2013-224159A

### Summary

### Technical Problem

In both the stationary type and the movable type, the location of the display unit and the like is limited in a way. More specifically, in the case of the stationary type, the location is limited to one position and is not changeable. In the case of the movable type, on the other hand, although the location along a horizontal direction may be changed to some extent, the location along a vertical direction is not changeable. Accordingly the user is required to approach to the display unit and the like when the user uses the display unit and the like.

The display unit and the like may be protruded from the outer surface of the cover. The user is thus likely to bump into the protruded display unit and the like when the user approaches to the display unit and the like (for example, when the user stands up).

Based on the foregoing, there is a demand for the display unit and the input unit that have better usability and higher safety.

By taking into account the circumstances described above, an object of the disclosure is to enhance the usability and the safety in a manufacturing apparatus that is provided with a display unit and an input unit and that is configured such that a circumference of a manufacturing unit is covered by a cover.

### Solution to Problem

The following describes each of various aspects provided adequately to solve the problems described above. Functions and advantageous effects that are characteristic of each of the aspects are also described as appropriate.

Aspect 1. There is provided a manufacturing apparatus comprising a manufacturing unit configured to manufacture a predetermined product and a cover configured to cover a circumference of the manufacturing unit. The cover includes a see-through portion that is transparent or translucent and causes the manufacturing unit to be visible from outside. The manufacturing apparatus comprises an input unit that is provided as a transparent or translucent thin film, that occupies at least a predetermined area on a surface of the see-through portion and that is configured to detect an entry by a contact with or an approach to the predetermined area and output at least information regarding detection of the entry and information regarding a position where the entry is detected in the predetermined area; a display unit that is formed by a transparent or translucent thin film, that is provided in at least one of a position in the see-through portion overlapping with the input unit and a nearby position thereof or provided in a position away from the cover, and that is configured to display a predetermined image using light emitted from a predetermined illumination unit in at least one of a position of the cover overlapping with the input unit and a nearby position thereof; and a controller configured to obtain information input from the input unit and to control the display unit. In response to a predetermined entry to the input unit, the controller is configured to control the display unit such as to display the predetermined image in at least one of a position of the predetermined entry detected by the input unit and a nearby position thereof.

In the configuration of Aspect 1 described above, the cover is provided with the see-through portion. The input unit provided in the see-through portion is formed by a transparent or translucent thin film. The display unit may be configured as a type that is provided in a position away from the cover (for example, projector) or as a type that is provided in the see-through portion and is formed by a transparent or translucent thin film (for example, transmission-type liquid crystal panel). This configuration accordingly causes the manufacturing unit to be readily visible from outside through the see-through portion, the input unit and the like. As a result, this configuration enables the status of the manufacturing unit to be appropriately checked and enhances the usability.

The input unit may be, for example, a resistive touch sensor including two resistance films opposed to each other or a capacitance-type touch sensor including electrodes arranged in a matrix.

Additionally, in the configuration of Aspect 1 described above, the input unit is provided as a thin film, and the display unit is formed by a thin film or is provided in the position away from the cover. This configuration prevents the display unit and the input unit from being protruded from the surface of the cover. This configuration enhances the safety.

Furthermore, in response to the predetermined entry to the input unit, the display unit causes the predetermined image (for example, information regarding the status of the manufacturing unit and an image for operation) to be displayed in, for example, the position where the entry is detected. Accordingly this configuration enables an image to be displayed in the user's desired arbitrary position in an image displayable area by the display unit. The input unit is provided at the position where the image is displayed or its nearby position. This configuration enables the user to enter information using the image or to enter information while checking the image. As a result, this configuration remarkably enhances the user's usability.

Aspect 2. In the manufacturing apparatus described in Aspect 1 above, the display unit may be configured to display a predetermined operation panel image as the predetermined image in a position of the cover that overlaps with the input unit, and the manufacturing unit may be controlled according to a detection position of the predetermined entry in the operation panel image.

The configuration of Aspect 2 described above enables the operation panel image to be displayed in any desired position in the image displayable area by the display unit. The operation panel image is displayed to overlap with the input unit, and the manufacturing unit is controlled by entering information using the operation panel image (for example, by a contact with a portion of the input unit that overlaps with the operation panel image). Accordingly this configuration enables control of the manufacturing unit to be performed at various positions and thereby further enhances the usability.

Aspect 3. In the manufacturing apparatus described in Aspect 2 above, in response to detection of the predetermined entry at multiple different positions by the input unit, the controller may be configured to control the display unit such as to display the operation panel image in the respective different positions.

The configuration of Aspect 3 described above enables the operation panel image to be displayed in multiple different positions. Accordingly this configuration enables control of the manufacturing unit to be performed in the respective different positions simultaneously. For example, control of one of a plurality of devices constituting the manufacturing unit and control of another device may be performed simultaneously. This configuration accordingly further enhances the usability.

Aspect 4. In the manufacturing apparatus described in either Aspect 2 or Aspect 3 above, the controller may be configured to obtain predetermined identification information input via the input unit, and the controller may be configured to control the display unit such as to display a different operation panel image according to the input identification information.

The configuration of Aspect 4 described above enables a different operation panel image to be displayed according to the identification information indicating, for example, the user's status or the like. More specifically, this configuration changes the displayed operation panel image for a worker in a production line and for a person who is in charge of maintenance of the manufacturing apparatus. This configuration accordingly ensures the better usability. This configuration also suppresses an erroneous change and the like in the manufacturing unit.

Aspect 5. The manufacturing apparatus described in any of Aspects 1 to 4 above may further comprise a status detector configured to detect a status with regard to at least one of the manufacturing unit and a periphery thereof and to output detected information to the controller. The controller may be configured to control the display unit such as to display an image according to the information output from the status detector, as the predetermined image.

The "status detector" may be, for example, a remaining amount sensor configured to measure a remaining amount of a material used for manufacturing a product, a temperature sensor configured to measure the temperature of the manufacturing unit, each of various devices constituting the manufacturing unit, or the periphery of the manufacturing unit, a humidity sensor configured to measure the humidity in the periphery of a device, a temperature sensor configured to measure the moving speed (conveyance speed) of one of various devices included in the manufacturing unit or a manufactured product, a pressure sensor configured to measure a pressure (for example, pressing pressure) occurring in one of various devices included in the manufacturing unit, a flow volume sensor configured to measure the volume (flow rate) of the air or the like inside of the cover, a failure detection sensor configured to detect a failure such as malfunction in the manufacturing unit or a use frequency measurement sensor configured to measure the use frequency of one of various consumable parts used in the manufacturing unit.

The configuration of Aspect 5 described above enables the information with regard to the status of the manufacturing unit or its periphery to be informed by the displayed image. This configuration thus ensures the further better usability.

Aspect 6. In the manufacturing apparatus described in Aspect 5 above, the manufacturing unit may comprise a supply portion configured to supply a material that is used to manufacture the product. The status detector may be configured to detect a remaining amount of the material, and the display unit may be configured to display the predetermined image in at least one of a position of the cover opposed to the supply portion and a nearby position thereof. The controller may be configured to control the display unit such as to display the image according to the information output from the status detector in at least one of the position of the cover opposed to the supply portion and the nearby position thereof.

The configuration of Aspect 6 described above enables an image with regard to the remaining amount of the material to be displayed in a position corresponding to the location of the supply portion (for example, the position opposed to the supply portion or its nearby position). This configuration enables the user to readily understand the correspondence relationship between the displayed image and the supply portion and immediately grasp the remaining amount of the material in the supply portion. As a result, this configuration further enhances the usability.

Aspect 7: The manufacturing apparatus described in any one of Aspects 1 to 6 above may further comprise an imaging unit configured to capture an image inside of the cover and to output information with regard to the captured image to the controller. The controller may be configured to control the display unit, such as to display the captured image as the predetermined image.

The configuration of Aspect 7 described above enables the state inside of the cover to be informed by the images obtained by the imaging unit without an access to inside of the cover. This configuration accordingly further enhances the usability and more reliably prevents invasion of foreign substances into the cover, thus enhancing the hygiene.

Aspect 8: In the manufacturing apparatus described in any one of Aspects 1 to 7 above, the display unit may be configured by a transmission-type liquid crystal panel that is formed by a transparent or translucent thin film and is provided in at least one of a position of the see-through portion overlapping with the input unit and a nearby position thereof, and the illumination unit may emit light to the liquid crystal panel.

The configuration of Aspect 8 described above readily provides the display unit in a thin film form.

Aspect 9. In the manufacturing apparatus described in Aspect 8 above, the illumination unit may be configured to additionally have a function of irradiating the manufacturing unit.

In the configuration of Aspect 9 described above, the illumination unit serves to irradiate the liquid crystal panel with light and also serves to illuminate the manufacturing unit. This configuration does not need to separately provide means for irradiating the liquid crystal panel with light and means for illuminating the manufacturing unit and thereby achieves downsizing of the apparatus and reduction of various costs.

Aspect 10. In the manufacturing apparatus described in any of Aspects 1 to 7 above, the display unit may be configured by a projector that includes the illumination unit and is configured to project the predetermined image on the cover by light from the illumination unit, and the projector may be provided in a position away from the cover.

The configuration of Aspect 10 described above readily provides the display unit that is placed in the positon away from the cover.

### Brief Description of Drawings

Fig. 1(a) is a perspective view illustrating a PTP sheet, and Fig. 1(b) is a perspective view illustrating a PTP film;
Fig. 2 is a partial enlarged sectional view illustrating the PTP sheet;
Fig. 3 is a block diagram illustrating the electrical configuration of a manufacturing unit and the like;
Fig. 4 is a diagram illustrating the schematic configuration of a manufacturing machine;
Fig. 5 is a perspective diagram illustrating the configuration of a manufacturing apparatus;
Fig. 6 is a partially broken diagram illustrating the schematic configuration of a liquid crystal panel, an entry detection sensor and the like;
Fig. 7 is a diagram illustrating an ordinary operation panel image;
Fig. 8 is a diagram illustrating a detailed operation panel image;
Fig. 9 is a diagram illustrating an information entry image;
Fig. 10 is a diagram illustrating the ordinary operation panel image with a settings change image displayed therein;
Fig. 11 is a flowchart showing an ordinary process performed by a control device;
Fig. 12 is a flowchart showing an operation panel image and the like display process;
Fig. 13 is a flowchart showing an operation panel image display process;
Fig. 14 is a flowchart showing a remaining amount image display process;
Fig. 15 is a flowchart showing a degree image display process;
Fig. 16 is a flowchart showing an operation-time process;
Fig. 17 is a flowchart showing a status display process;
Fig. 18 is a flowchart showing a captured image display process;
Fig. 19 is a flowchart showing a changing process;
Fig. 20 is a flowchart showing an image enlargement process;
Fig. 21 is a flowchart showing an image reduction process;
Fig. 22 is a flowchart showing an identification information entry process;
Fig. 23 is a flowchart showing an information entry image display process;
Fig. 24 is a flowchart showing an information entry-time process;
Fig. 25 is a flowchart showing a determination-time process;
Fig. 26 is a flowchart showing an identification information entry-time process;
Fig. 27 is a flowchart showing a first rotational angle changing process;
Fig. 28 is a flowchart showing a second rotational angle changing process;
Fig. 29 is a flowchart showing a seal pressure changing process;
Fig. 30 is a flowchart showing an image erasing process;
Fig. 31 is a diagram illustrating a button area table;
Fig. 32 is a diagram illustrating an image display area table;
Fig. 33 is a perspective diagram illustrating the manufacturing apparatus with various images displayed thereon;
Fig. 34 is a perspective diagram illustrating the manufacturing device with a plurality of operation panel images displayed thereon;
Fig. 35 is a perspective diagram illustrating operation panel images and the like displayed on a side face and a rear face of a cover;
Fig. 36 is a diagram illustrating the ordinary operation panel image with a captured image displayed therein;
Fig. 37 is a perspective diagram schematically illustrating enlargement and reduction of an operation panel image;
Fig. 38 is a perspective diagram illustrating the manufacturing apparatus with the detailed operation panel image displayed thereon;
Fig. 39 is a block diagram illustrating the electrical configuration of a projector, a light control film and the like according to a second embodiment;
Fig. 40 is a perspective diagram illustrating a captured image displayed on a cover according to another embodiment;
Fig. 41 is a perspective diagram illustrating a simplified operation panel image according to another embodiment; and
Fig. 42 is a perspective diagram illustrating an image displayed on an inner surface of a panel main body according to another embodiment.

### Description of Embodiments

The following describes embodiments with reference to drawings.

### [First Embodiment]

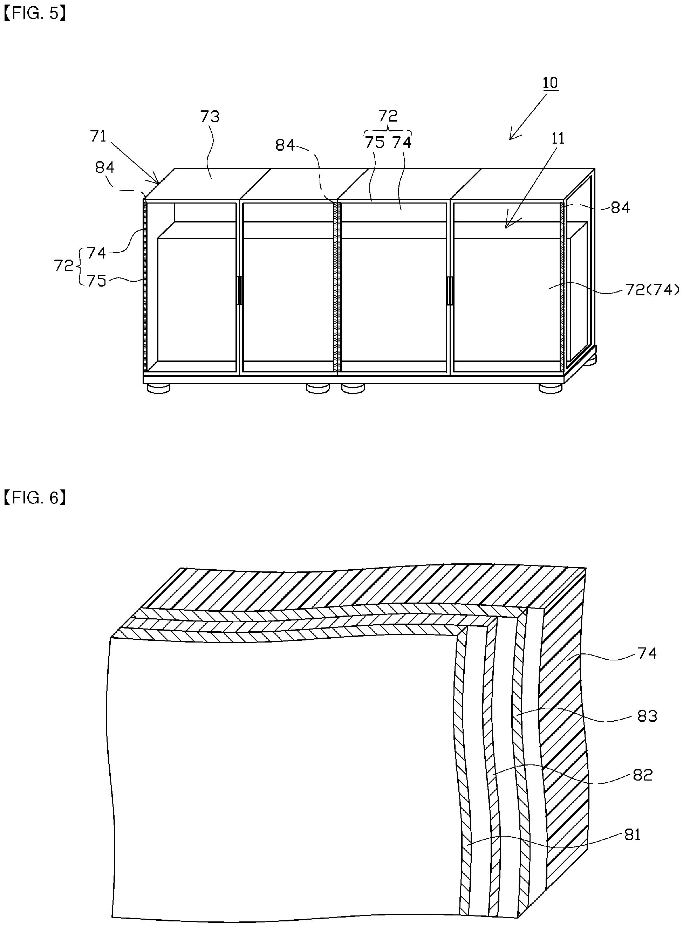

As shown in Fig. 5, a manufacturing apparatus 10 according to this embodiment includes a manufacturing unit 11 configured to manufacture a PTP sheet as a product, and a cover 71 configured to cover the circumference of the manufacturing unit 11.

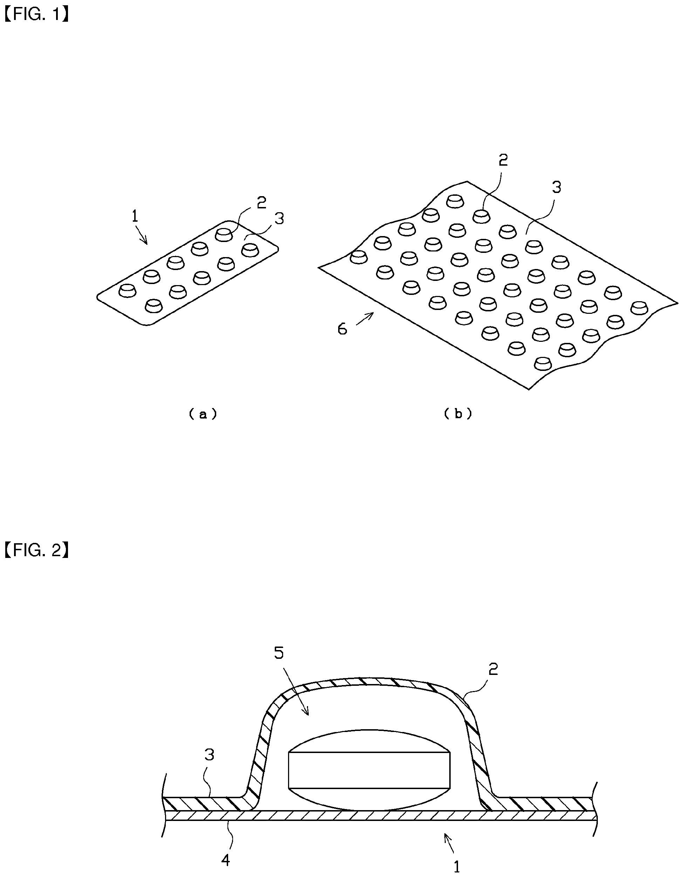

The configuration of the PTP sheet is described first in detail. As shown in Figs. 1(a) and 1(b) and Fig. 2, a PTP sheet 1 includes a container film 3 provided with a plurality of pocket portions 2, and a cover film 4 mounted to the container film 3 such as to close the respective pocket portions 2. One pill 5 is placed as a content in each of the pocket portions 2. The type, the shape and the like of the content are not specifically limited, but the content may be different from the pill 5, for example, a food product, an electronic component capsule or the like.

The container film 3 according to this embodiment is made of, for example, a thermoplastic resin material such as PP (polypropylene) or PVC (polyvinyl chloride) or an aluminum foil.

The cover film 4 is, on the other hand, composed of an opaque material (for example, aluminum foil) with a sealant that is made of, for example, a polyester resin and is applied on a surface thereof. The cover film 4 has sealing lines (not shown) that are arranged in a mesh pattern of parallelograms.

The PTP sheet 1 (shown in Fig. 1(a)) is manufactured by punching sheets from a long strip-like PTP film 6 (shown in Fig. 1(b)) that is comprised of the long strip-like container film 3 and the long strip-like cover film 4.

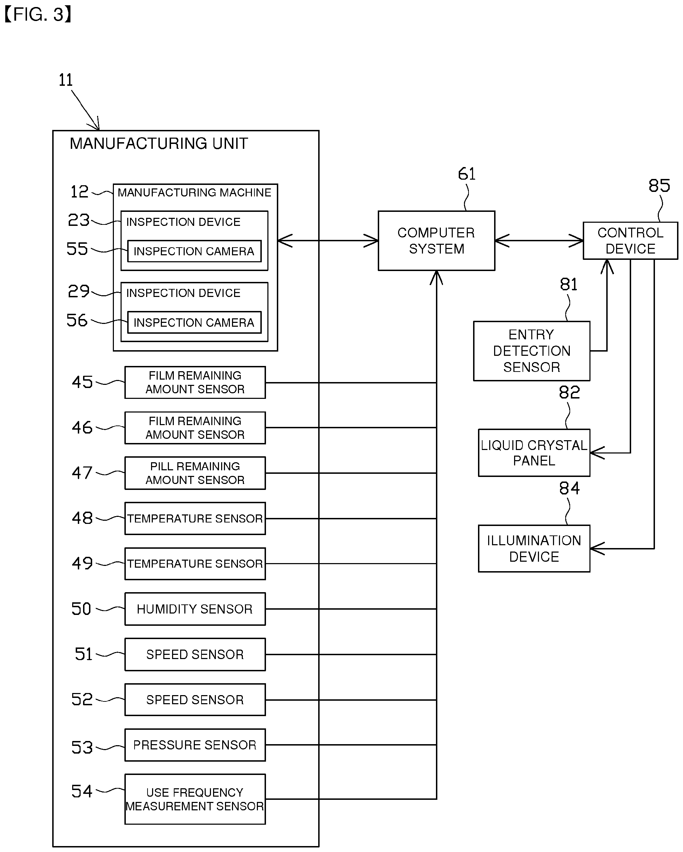

The manufacturing unit 11 is described next. As shown in Fig. 3, the manufacturing unit 11 includes a manufacturing machine 12 provided with various devices, and various sensors 45 to 54 serving as status detectors configured to detect the status or the like of the manufacturing machine 12. The operation control of the manufacturing machine 12 is performed by a computer system 61.

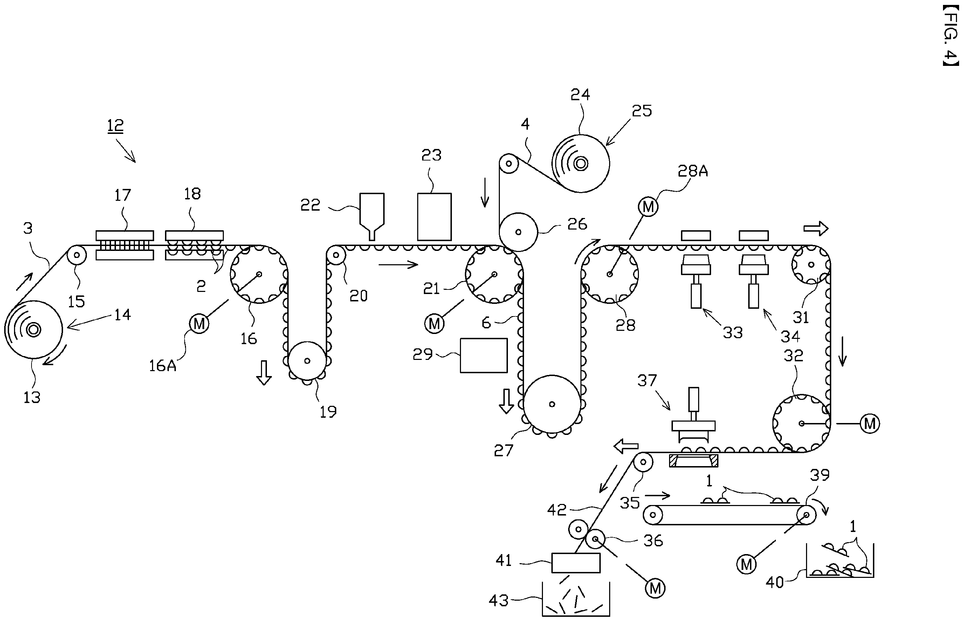

The general configuration of the manufacturing machine 12 is described first with reference to Fig. 4.

As shown in Fig. 4, a film supply device 14 is provided on a most upstream side of the manufacturing machine 12 and is configured to include a film roll 13 formed by winding the long strip-like container film 3 in a roll form. The film supply device 14 includes a delivery roller (not shown) or the like configured to deliver the container film 3 from the film roll 13. The delivered container film 3 is then guided by a guide roll 15. The container film 3 is subsequently laid on an intermittent feed roll 16 provided on a downstream side of the guide roll 15. The intermittent feed roll 16 is coupled with a motor 16A that is rotated in an intermittent manner and is configured to intermittently convey the container film 3.

A heating device 17 and a pocket portion forming device 18 are sequentially placed along the conveyance path of the container film 3 between the guide roll 15 and the intermittent feed roll 16. The container film 3 is heated to be relatively soft by the heating device 17, and the plurality of pocket portions 2 are then formed at predetermined positions of the container film 3 by the pocket portion forming device 18. Formation of the pocket portions 2 is performed during an interval between conveying operations of the container film 3 by the intermittent feed roll 16.

The container film 3 fed from the intermittent feed roll 16 is sequentially laid on a tension roll 19, a guide roll 20 and a film receiving roll 21 in this order. The film receiving roll 21 is coupled with a motor that is rotated at a fixed speed and is configured to continuously convey the container film 3 at a fixed speed. The tension roll 19 is configured to pull the container film 3 to the state of tension by an elastic force. This configuration prevents a slack of the container film 3 due to a difference between the conveying operation by the intermittent feed roll 16 and the conveying operation by the film receiving roll 21 and continuously keeps the container film 3 in the state of tension.

A pill packing device 22 is placed along the conveyance path of the container film 3 between the guide roll 20 and the film receiving rill 21. The pill packing device 22 includes a hopper (not shown) in which the pills 5 are accumulated and is configured to open a shutter at predetermined time intervals in synchronism with the conveying operation of the container film 3 by the fil receiving roll 21, such as to drop the pill 5 each time. The pill 5 is packed in each of the pocket portions 2 by this shutter opening operation.

An inspection device 23 is placed along the conveyance path of the container film 3 between the pill packing device 22 and the film receiving roll 21.

The inspection device 23 is used to perform inspection mainly with regard to a failure of pill packing, for example, whether the pill 5 is certainly packed in each of the pocket portions 2, the presence or the absence of any abnormality of the pills 5 and the presence or the absence of any contamination in the pocket portions 2. An inspection object of the inspection device 23 is each region of the container film 3 that is punched to the PTP sheet 1.

The inspection device 23 includes an inspection camera 55 (as shown in Fig. 3) that serves as an imaging unit to image the container film 3 and the pills 5 and obtain an image of the inspection object. The inspection device 23 performs inspection with regard to, for example, the presence or the absence of any abnormality of the pills 5, based on the image obtained by the inspection camera 55 or a processed image obtained by processing the obtained image (for example, a monochrome image obtained by binarization process of the obtained image). The image data obtained by the inspection camera 55 is additionally output from the inspection device 23 to the computer system 61 at every time of imaging by the inspection camera 55.

The long strip-like cover film 4 is also wound on a roll and is placed on a most upstream side. A film roll 24 formed by winding the cover film 4 in a roll form is fed toward a heating roll 26 by a film supply device 25 that includes a delivery roller (not shown) or the like. The heating roll 26 is heated by a predetermined heater and is pressed against to be in contact with the film receiving roll 21. The container film 3 and the cover film 4 are fed between the two rolls 21 and 26. The container film 3 and the cover film 4 pass through between the two rolls 21 and 26 in the heated and pressed contact state, so that the cover film 4 is attached to the container film 3 such as to close the respective pocket portions 2. This series of operations provides the PTP film 6 manufactured such that the pill 5 is packed in each of the pocket portions 2. Fine convexes in a mesh pattern are formed on the surface of the heating roll 26. This surface with the fine convexes is strongly pressed against the cover film 4, so that sealing lines are formed on the cover film 4 to provide strong seals.

According to this embodiment, the heating roll 26 is configured to be moved closer to and away from the film receiving roll 21 and to change the pressure (seal pressure) applied from the heating roll 26 to the film receiving roll 21.

The PTP film 6 fed from the film receiving roll 21 is sequentially laid on a tension roll 27 and an intermittent feed roll 28 in this order.

The intermittent feed roll 28 is coupled with a motor 28A that is rotated in an intermittent manner and is configured to intermittently convey the PTP film 6. The tension roll 27 is configured to pull the PTP film 6 to the state of tension by an elastic force. This configuration prevents a slack of the PTP film 6 due to a difference between the conveying operation by the film receiving roll 21 and the conveying operation by the intermittent feed roll 28 and continuously keeps the PTP film 6 in the state of tension.

An inspection device 29 is placed along the conveyance path of the PTP film 6 between the film receiving roll 21 and the tension roll 27. This inspection device 29 is used to perform inspection mainly with regard to a damage such as cracking or breaking of the cover film 4. An inspection object of the inspection device 29 is each region of the PTP film 6 that is punched to the PTP sheet 1.

The inspection device 29 includes an inspection camera 56 (as shown in Fig. 3) that serves as an imaging unit to capture an image of the PTP film 6. The inspection device 29 performs inspection with regard to, for example, damage of the cover film 4, based on the image obtained by the inspection camera 56 or a processed image obtained by processing the obtained image. The image data obtained by the inspection camera 56 is additionally output to the computer system 61 at every time of imaging by the inspection camera 56.

The PTP film 6 fed from the intermittent feed roll 28 is sequentially laid on a tension roll 31 and an intermittent feed roll 32 in this order.

The intermittent feed roll 32 is coupled with a motor that is rotated in an intermittent manner and is configured to intermittently convey the PTP film 6. The tension roll 31 is configured to pull the PTP film 6 to the state of tension by an elastic force and serves to prevent a slack of the PTP film 6 between the two intermittent feed rolls 28 and 32.

A slit formation device 33 and a stamping device 34 are sequentially placed along the conveyance path of the PTP film 6 between the intermittent feed roll 28 and the tension roll 31. The slit formation device 33 serves to form a cutting slit at predetermined positions of the PTP film 6. The stamping device 34 serves to stamp a mark at predetermined positions of the PTP film 6 (for example, in tag portions).

The PTP film 6 fed from the intermittent feed roll 32 is sequentially laid on a tension roll 35 and a continuous feed roll 36 in this order on a downstream side of the intermittent feed roll 32. A sheet punching device 37 is placed along the conveyance path of the PTP film 6 between the intermittent feed roll 32 and the tension roll 35. The sheet punching device 37 includes a cutting blade, which serves to cut out the outer periphery of each PTP sheet 1 as a unit and thereby punch the PTP sheets 1 from the PTP film 6. The cutting blade is a consumable part and is configured to be replaceable.

The PTP sheets 1 punched by the sheet stamping device 37 are conveyed by a discharge conveyor 39 and are once accumulated in a finished product hopper 40. When the PTP sheet 1 is determined as a defective product by either of the inspection devices 23 and 29 described above, the PTP sheet 1 determined as the defective product is separately discharged by a non-illustrated defective sheet discharge mechanism.

A cutting device 41 is placed on a downstream side of the continuous feed roll 36. An unrequired film portion 42 that is a residual part (scrap part) remaining in a belt-like form after punching by the sheet punching device 37 is guided by the tension roll 35 and the continuous feed roll 36 and is subsequently led to the cutting device 41. The cutting device 41 serves to cut the unrequired film portion 42 into predetermined dimensions as scraps. These scraps are accumulated in a scrap hopper and are separately discarded.

The film supply devices 14 and 25 and the pill packing device 22 according to this embodiment respectively correspond to the supply portion.

The sensors 45 to 54 are described below with reference to Fig. 3. The sensors 45 to 54 are placed inside of the cover 71 and are provided in the above respective devices included in the manufacturing machine 12 or their peripheries.

More specifically, a film remaining amount sensor 45 is provided corresponding to the film supply device 14 to detect the remaining amount of the film roll 13. The film remaining amount sensor 45 is configured to, for example, irradiate an outer surface of the film roll 13 with ultrasonic wave or the like and receive the reflected wave, such as to detect the diameter of the film roll 13. The film remaining amount sensor 45 is also configured to output a roll remaining amount signal based on the detected diameter to the computer system 61.

The film supply device 25 is provided with a film remaining amount sensor 46 that has a practically similar configuration to that of the film remaining amount sensor 45 to detect the remaining amount of the film roll 24. The film remaining amount sensor 46 is configured to irradiate an outer surface of the film roll 24 with ultrasonic wave, light or the like, such as to detect the diameter of the film roll 24 and is also configured to output a roll remaining amount signal based on the detected diameter to the computer system 61 at predetermined time intervals.

A pill remaining amount sensor 47 is provided corresponding to the pill filling device 22 to detect the remaining amount of the pills 5 accumulated in the hopper. The pill remaining amount sensor 47 may be configured by, for example, a photoelectric sensor to irradiate the inside of the hopper with light and detect the height of the pills 5 accumulated in the hopper based on the reflected light. A pill remaining amount signal based on the detected height is output to the computer system 61 at predetermined time intervals.

Additionally, a temperature sensor 48 is provided to detect the temperature of the heating roll 26, and a temperature sensor 49 is provided to detect the temperature inside of the cover 71 (ambient temperature of the manufacturing machine 12). Temperature signals based on the detected temperatures are output from the temperature sensors 48 and 49 to the computer system 61 at predetermined time intervals.

A humidity sensor 50 is also placed inside of the cover 71 to detect the humidity inside of the cover 71. A humidity signal based on the detected humidity is output from the humidity sensor 50 to the computer system 61 at predetermined time intervals.

Furthermore, a speed sensor 51 is provided to detect the speed of the container film 3 that is continuously conveyed, and a speed sensor 52 is provided to detect the speed of the PTP film 6 that is conveyed intermittently (these speed sensors may be provided corresponding to the the respective motors or the like). Each of the speed sensors 51 and 52 is configured to detect the speed of an object using laser beam or the like. Speed signals based on the detected speeds are output from the speed sensors 51 and 52 to the computer system 61 at predetermined time intervals.

A pressure sensor 53 is provided corresponding to the film receiving roll 21 and the heating roll 26 to detect the pressure applied from the heating roll 26 to the film receiving roll 21. The pressure sensor 53 may be provided, for example, on an outer circumferential face of the film receiving roll 21 and is configured to output a pressure signal based on a change in electrical resistance therein to the computer system 61 at predetermined time intervals.

Additionally, a use frequency measurement sensor 54 is provided corresponding to the sheet punching device 37. The use frequency measurement sensor 54 is configured to output a use frequency signal to the computer system 61 every time a punching operation of the PTP film 6 is performed with the sheet punching device 37.

The respective sensors 45 to 54 described above according to this embodiment respectively correspond to the status detectors. The configurations of the respective sensors 45 to 54 are not limited to those described above, but different configurations may be employed for these sensors 45 to 54.

The computer system 61 includes, for example, a CPU that serves as an operator, a ROM that is configured to store various programs, a RAM that is configured to temporarily store various data such as operation data and input/output data, and a hard disk that is configured to store the operation data and the like for a long time period.

The computer system 61 is configured to perform drive control of the various devices described above, for example, the heating device 17, the pocket portion forming device 18 and the pill packing device 22 and perform drive control of the various rolls described above, for example, the film receiving roll 21. The drive control of the various rolls include control of the operations of the motors 16A and 28A provided to drive the intermittent feed rolls 16 and 28 and control of the pressure (seal pressure) applied from the heating roll 26 to the film receiving roll 21.

The computer system 61 performs such drive controls by outputting control signals to the various devices, based on set data (for example, data on driving amounts of various mechanisms) that are set in advance in the ROM or the hard disk described above. For example, set values of the rotation angles per operation of the motors 16A and 28A and the seal pressure are stored in the computer system 61. The computer system 61 controls the operations of the motors 16A and 28A and the heating roll 26, based on these set values.

The computer system 61 also obtains various data, such as the remaining amounts of the pills 5 and the film rolls 13 and 24, based on the signals input from the various sensors 45 to 54 described above, and stores the obtained various data into the hard disk.

More specifically, when the roll remaining amount signal is input from the film remaining amount sensor 45 or 46, the remaining amount of the film roll 13 or 24 is calculated, based on the input roll remaining amount signal (information with regard to the diameter of the film roll 13 or 24) and is stored in the hard disk. Every time the roll remaining amount signal is input, the newly calculated remaining amount of the film roll 13 or 24 is saved in the hard disk.

When the pill remaining amount signal is input from the pill remaining amount sensor 47, the remaining amount of the pills 5 accumulated in the hopper is roughly computed, based on the input pill remaining amount signal (information with regard to the height of the pills 5). The remaining amount of the pills 5 is roughly classified in a plurality of levels (for example, 5 to 10 levels), based on a plurality of threshold values set in advance. For example, it is assumed that the remaining amount of the pills 5 is classified in six levels. When the height of the pills 5 accumulated in the hopper is equal to or greater than a maximum value among the plurality of threshold values, the remaining amount of the pills 5 is computed as "5". When the height of the pills 5 accumulated in the hopper is less than a minimum value among the plurality of threshold values, on the other hand, the remaining amount of the pills 5 is computed as "0". The computed remaining amount of the pills 5 is stored in the hard disk. Every time the pill remaining amount signal is input, the newly computed remaining amount of the pills 5 is saved in the hard disk.

When the temperature signal is input from the temperature sensor 48 or 49, the temperature of the heating roll 26 or the temperature inside of the cover 71 is calculated, based on the input temperature signal. The calculated temperature is stored in the hard disk. Every time the temperature signal is input, the temperature is calculated. All the calculated temperatures are stored along with the respective input times of the temperature signals (i.e., the measurement times of the temperatures) in the hard disk.

When the humidity signal is input from the humidity sensor 50, the humidity inside of the cover 71 is calculated, based on the input humidity signal. Every time the humidity signal is input, the humidity is calculated. All the calculated humidities are stored along with the respective input times of the humidity signals (i.e., the measurement times of the humidities) in the hard disk.

When the speed signal is input from the speed sensor 51 or 52, the conveyance speed of the container film 3 or the conveyance speed of the PTP film 6 is calculated, based on the input speed signal. Every time the speed signal is input, the conveyance speed is calculated. All the calculated conveyance speeds are stored along with the respective input times of the speed signals (i.e., the measurement times of the conveyance speeds) in the hard disk.

When the pressure signal is input from the pressure sensor 53, the pressure applied from the heating roll 26 to the film receiving roll 21 (seal pressure) is calculated, based on the input pressure signal (information with regard to a change in electrical resistance). All the calculated seal pressures are stored along with the respective input times of the pressure signals (i.e., the measurement times of the pressures) in the hard disk.

When the use frequency signal is input from the use frequency measurement sensor 54, the value of a use frequency counter stored in the hard disk is incremented by one. The use frequency counter is used to measure the number of uses of the cutting blade described above (i.e., number of punching operations). When the cutting blade is replaced in the sheet punching device 37, the value of the use frequency counter is reset to an initial value (=0).

Image data obtained by imaging with the inspection cameras 55 and 56 are also input from the inspection devices 23 and 29 to the computer 61. When such image data is input, the computer system 61 allocates a sequential number to the input image data and stores the image data with respect to each inspection object in the hard disk.

The following describes the configuration of the cover 71. As shown in Fig. 5, the cover 71 includes panel plates 72 arranged to surround the four faces of the manufacturing unit 11 and an opaque top plate 73 that is placed above the manufacturing unit 11 and is made of a resin or a metal. A bottom plate may also be included in the cover 71.

The panel plate 72 as a side wall is comprised of a plate-like panel main body 74 and a metal outer frame 75 provided along the outer periphery of the panel main body 74. The panel main body 74 is composed of a transparent resin, such as acrylic resin and generally causes the manufacturing unit 11 placed in the cover 71 to be visible through the panel main body 74 from outside of the cover 71. According to this embodiment, the panel main body 74 corresponds to the see-through portion.

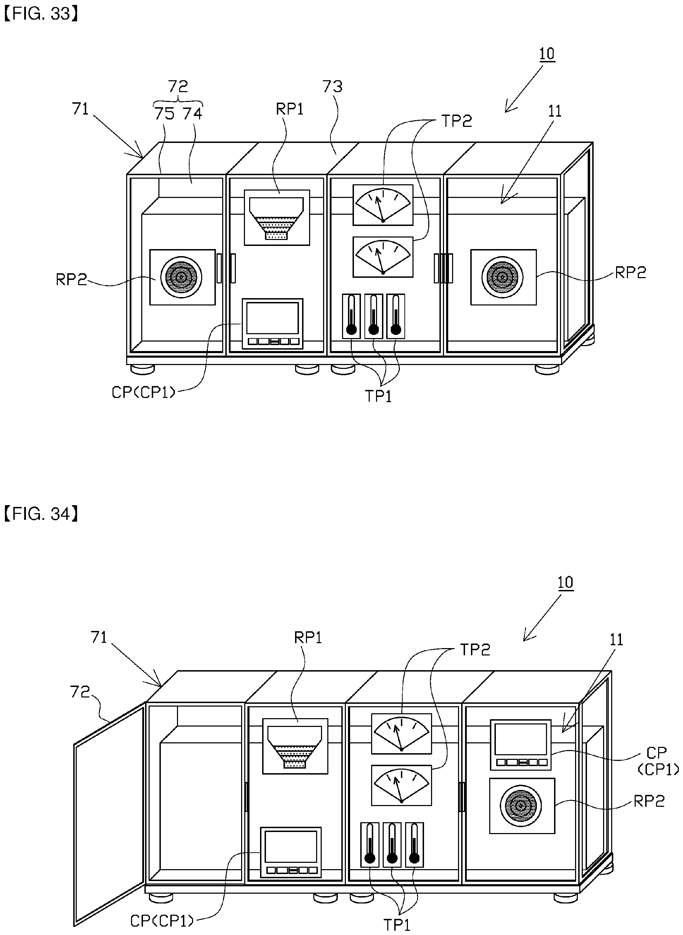

One of the panel plates 72 placed on the four faces of the manufacturing unit 11 is supported by a predetermined hinge (not shown) to be rotatable relative to an adjacent panel plate 72 that is adjacent to one side of the outer periphery of the one panel plate 72 (as shown in Fig. 34). The supported panel plate 72 serves as a door to provide access to the inside of the cover 71.

Additionally, according to this embodiment, an entry detection sensor 81 as an input unit, a liquid crystal panel 82 as a display unit and a light guide panel 83, which are all formed by thin films, are provided on an outer surface of each panel body 74 as shown in Fig. 6. The entry detection sensor 81, the liquid crystal panel 82 and the light guide panel 83 are laid one over another in this order.

The entry detection sensor 81 is a capacitance-type projection touch sensor and is formed by a thin film to be transparent or translucent. The entry detection sensor 81 may be configured, for example, such that a transparent first electrode film including a plurality of electrodes extended in an x-axis direction (left-right direction), a transparent second electrode film including a plurality of electrodes extended in a y-axis direction (vertical direction), and an insulating film placed between the two electrode films to insulate the two electrode films are placed between a glass substrate and a transparent cover provided to cover the surface. In the description below, coordinates in the entry detection sensor 81 are expressed by small letters x and y.

The respective electrodes provided on the respective electrode films described above are connected with a substrate for control that is hidden by the outer frame 75. When the capacitance between the electrodes provided on the first electrode film and the electrodes provided on the second electrode film is changed by the contact with or approach to the transparent cover, information indicating that there is an entry to the entry detection sensor 81 and coordinate information (x coordinate and y coordinate) of a portion having the change (position at which the entry is detected) are output from the substrate for control to a control device 85 described later. The coordinate information output here is specified by using the center of one entry detection sensor 81 as the origin when all the entry detection sensors 81 are arrayed in one face.

For example, a resistive touch sensor including two resistance films opposed to each other may be employed as the entry detection sensor 81.

The liquid crystal panel 82 may be configured as a thin film including, for example, a TFT substrate with a plurality of pixel electrodes formed on a transparent insulating substrate, a counter substrate with a plurality of counter electrodes formed on a transparent insulating substrate, a liquid crystal layer sealed between the TFT substrate and the counter substrate, two polarizing plates arranged such that the TFT substrate, the counter substrate and the liquid crystal layer are placed therebetween, and a color filter provided on a surface of one polarizing plate. A driving substrate is connected with an edge of the liquid crystal panel 82 to send an image signal and supply driving power to the TFT substrate and the counter substrate.

According to this embodiment, driving power is generally supplied from the driving substrate to the TFT substrate and the like, and the liquid crystal panel 82 is formed to be transparent or translucent. Sending the image signal to the TFT substrate and the like while regulating the driving power enables an image to be displayed on part or whole of the liquid crystal panel 82 (panel main body 74). The driving substrate is hidden by the outer frame 75.

The liquid crystal panel 82 is configured such that a plurality of pixels are arrayed and arranged in the X-axis direction and in the Y-axis direction. An image display range on the liquid crystal panel 82 can be specified by using coordinates indicating the positions of pixels. In the description below, coordinates in the liquid crystal panel 82 are expressed by capital letters X and Y. The coordinate information of the liquid crystal panel 82 output here is specified by using the center of one liquid crystal panel 82 as the origin when all the liquid crystal panels 82 are arrayed in one face.

The light guide panel 83 is provided by forming a large number of grooves (dots) in a transparent resin plate such as acrylic plate. Light enters from an illumination device 84 as an illumination unit that is placed along the vertical direction on a rear face of the outer frame 75 (for example, an LED or a cold cathode tube, placed in a location with a dotted pattern in Fig. 5), to one side face of the light guide panel 83, so that the entire light guide panel 83 serves as the light-emitting surface. The light guide panel 83 and the illumination device 84 serve as backlight of the liquid crystal panel 82. The illumination device 84 according to this embodiment also serves to illuminate the manufacturing unit 11.

Additionally, the substrate for control of the entry detection sensor 81, the driving circuit of the liquid crystal panel 82 and the illumination device 84 are electrically connected with the control device 85 serving as a controller (as shown in Fig. 3).

The control device 85 includes, for example, a CPU that serves as an operator, a ROM that is configured to store various programs, a RAM that is configured to temporarily store various data such as operation data and input/output data, and a hard disk that is configured to store the operation data and the like for a long time period. The coordinate information and the like are input from the entry detection sensor 81 into the controller 85. The control device 85 controls the operations of the driving substrate of the liquid crystal panel 82 and the operations of the illumination device 84, such as to display various images on the liquid crystal panel 82. According to this embodiment, the liquid crystal panel 82 is generally transparent or opaque such as to cause the inside of the cover 71 to be visible through the panel main body 74, the entry detection sensor 82, the liquid crystal panel 82 and the light guide panel 83. When an image is displayed, an image display portion in the liquid crystal panel 82 is opaque or practically opaque. This configuration enhances the visibility of the image.

The control device 85 is connected with the computer system 61, such as to transmit data to and from the computer system 61. Additionally, information with regard to a relative positional relationship between the coordinates in the entry detection sensor 81 and the coordinates in the liquid crystal panel 82 is stored in advance in the ROM of the control device 85. The control device 85 enables coordinates of one of the entry detection sensor 81 and the liquid crystal panel 82 in a position overlapping with coordinates of the other of the entry detection sensor 81 and the liquid crystal panel 82 to be identified from the coordinates of the other, based on this information with regard to the relative positional relationship.

Moreover, data of various images, for example, an operation panel image CP, an information entry image IP, a status display image JP, a settings change image EP, remaining amount display images RP1 and RP2 and degree display images TP1 and TP2, are stored in advance in the hard disk of the control device 85.

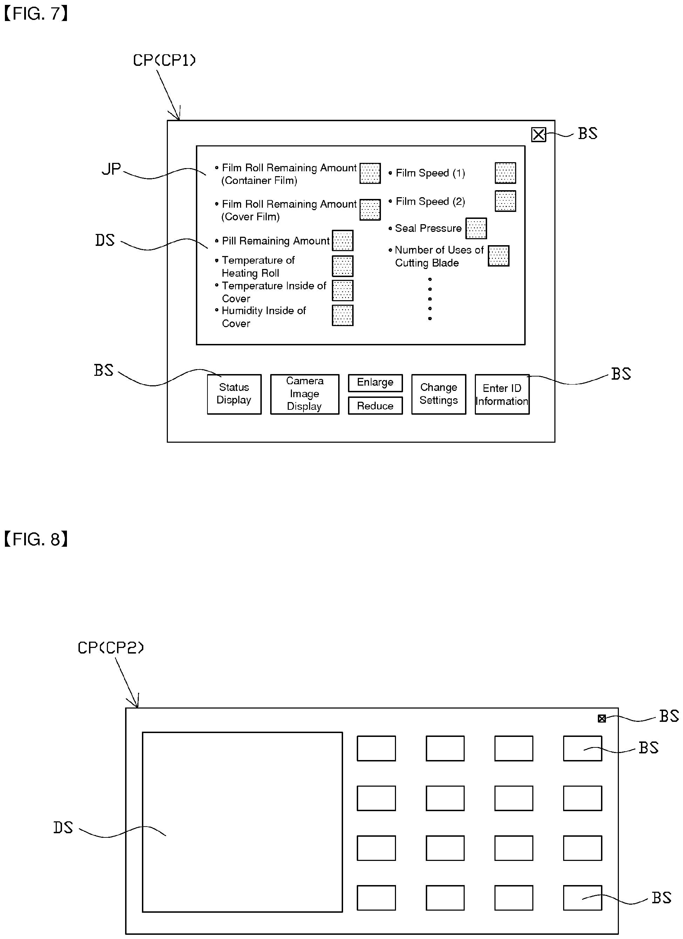

As shown in Fig. 7, the operation panel image CP includes, for example, a display field DS provided to display various information, images and the like and a plurality of button areas BS used, for example, to change the content displayed in the display field DS and display the information entry image IP described below. Letter strings such as "Status Display", "Camera Image Display", "Enlarge" "Reduce", "Change Settings" and "Enter ID Information" and symbols such as "×" are shown in the button areas BS. An ordinary operation panel image CP1 that is generally used (shown in Fig. 7) and a detailed operation panel image CP2 (shown in Fig. 8) including a greater number of button areas BS compared with the ordinary operation panel image CP1 are provided as the operation panel image CP.

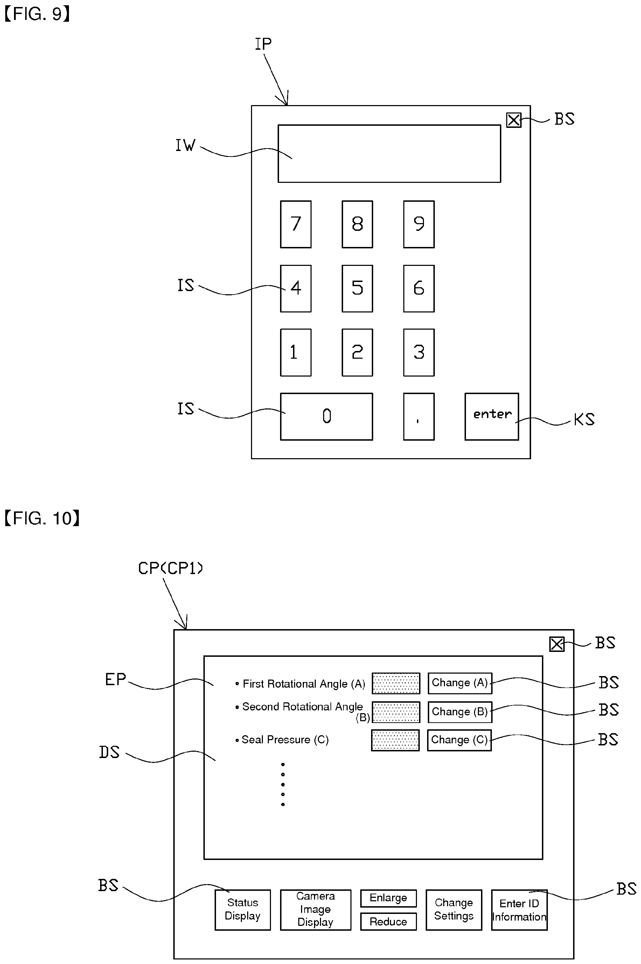

As shown in Fig. 9, the information entry image IP includes, for example, a plurality of entry areas IS used to enter a numerical value or the like, a decision area KS used to eventually set the numerical value or the like and an entry display field IW used to display the entered numerical value or the like.

The status display image JP is an image that is displayed in the display field DS and includes areas provided to display information obtained by the sensors 45 to 54 described above (areas with dotted pattern in Fig. 7) and areas provided to show item names of the respective pieces of information (as shown in Fig. 7).

As shown in Fig. 10, the settings change image EP is an image that is displayed in the display field DS and includes areas provided to display set values stored in the computer system 61 for control of the manufacturing machine 12 (areas with dotted pattern in Fig. 10) and a plurality of button areas BS with letter strings such as "Change (A)", "Change (B)" and "Change (C)".

The remaining amount display image RP1 is a diagram schematically illustrating the pills 5 accumulated in the hopper of the pill packing device 22 and is used to show the remaining amount of the pills 5 accumulated in the hopper (as shown in, for example, Fig. 33). According to this embodiment, the remaining amount display image RP1 is provided as an image in which the inner region of the schematically illustrated hopper is divided in the vertical direction.

The remaining amount display images RP2 are diagrams schematically illustrating the film rolls 13 and 24 and is used to show the remaining amounts of the film rolls 13 and 24 (as shown in, for example, Fig. 33). According to this embodiment, the remaining amount display image RP2 is provided as an image that includes a plurality of circles arranged concentrically.

The degree display images TP1 are used to indicate the temperatures and the humidity and are provided as images that schematically illustrate thermometers and a hygrometer according to this embodiment (as shown in, for example, Fig. 33). The degree display images TP2 are used to indicate the speeds and are provided as images that schematically illustrate speedometers according to this embodiment (as shown in, for example, Fig. 33).

A button area BS with a symbol "×" used to erase the image is provided in each of the above respective images IP, RP1, RP2, TP1 and TP2 (not shown with regard to the images RP1, RP2, TP1 and TP2). The configurations of the respective images described above are only illustrative and may be changed appropriately.

Coordinate ranges of positions on the liquid crystal panel 82 that are respectively opposed to the pill packing device 22 and the film rolls 13 and 24 are stored in advance in the hard disk of the control device 85. An identification number database is also stored in the hard disk of the control device 85. The identification number database stores one or a plurality of identification numbers, each being allocated to a manager who is in charge of maintenance of the manufacturing unit 11.

Respective processes performed by the control device 85 are described below with reference to flowcharts. Programs that implement the respective processes described below are stored in advance in the ROM or the hard disk of the control device 85.

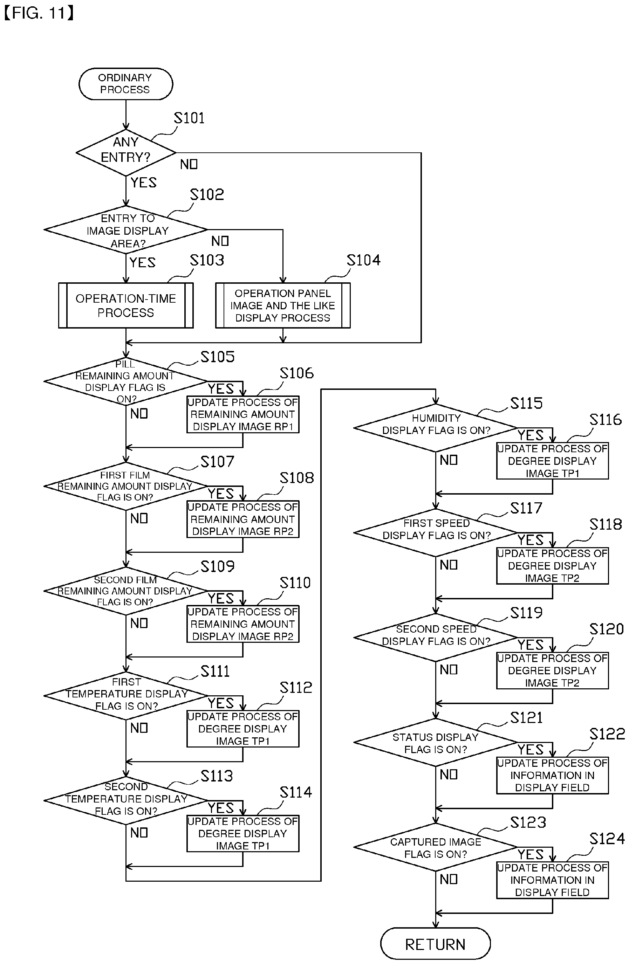

The following first describes an ordinary process performed at predetermined time intervals by the control device 85. As shown in Fig. 11, in the ordinary process, the control device 85 first determines whether there is an entry to the entry detection sensor 81 at step S101. When there is no entry (step S101: NO), the control device 85 proceeds to step S105.

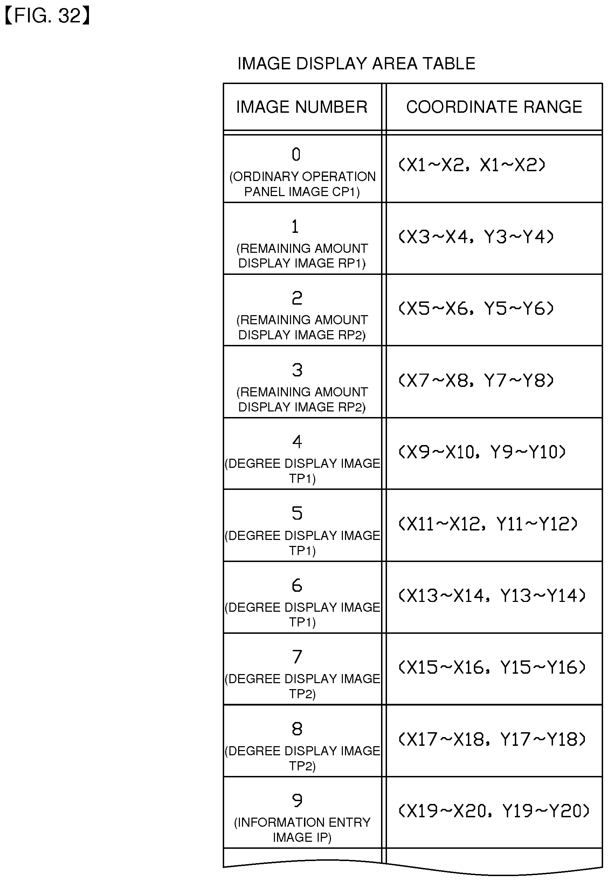

When there is an entry (step S101: YES), on the other hand, the control device 85 subsequently determines whether the entry is an entry to an image display area at step S102. The image display area denotes an area on the liquid crystal panel 82 in which an image is displayed, and is identified based on an image display area table stored in the RAM of the control device 85. The image display area table stores coordinate ranges (for example, (X1 to X2, Y1 to Y2)) indicating respective image display areas on the liquid crystal panel 82, along with image numbers allocated to respective images (as shown in Fig. 32).

At step S102, it is determined whether the entry is an entry to an image display area by identifying a coordinate range on the liquid crystal panel 82 in a position overlapping with the coordinates of the entry to the entry detection sensor 81 and determining whether the identified coordinate range is included in the coordinate ranges stored in the image display area table. The coordinate range on the liquid crystal panel 82 in the position overlapping with the coordinates of the entry to the entry detection sensor 81 is identified, based on the information with regard to the relative positional relationship between the coordinates in the entry detection sensor 81 and the coordinate in the liquid crystal panel 82 that is stored in advance in the control device 85 as described above.

In the case of an affirmative answer at step S102, i.e., when the entry is an entry to a portion in which an image is displayed, the control device 85 proceeds to an operation-time process at step S103. In the case of a negative answer at step S102, i.e., when the entry is an entry to a portion in which no image is displayed (image non-display portion), on the other hand, the control device 85 proceeds to an operation panel image and the like display process at step S104.

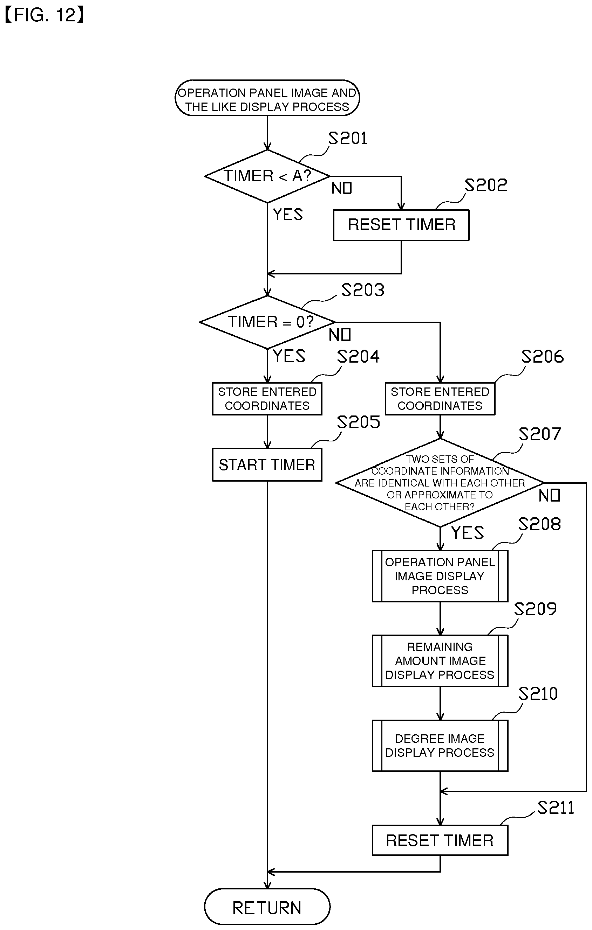

The operation panel image and the like display process is described below. As shown in Fig. 12, in the operation panel image and the like display process, the control device 85 first determines whether a value on a predetermined timer is smaller than a predetermined reference value A at step S201. This timer is used to check a time interval for another entry to the entry detection sensor 81 and is incremented by one at every predetermined time interval (for example, at every 100 ms).

In the case of an affirmative answer at step S201, the processing flow proceeds to step 203. In the case of a negative answer at step S201, i.e., when there is no next entry to the image non-display portion until the value on the timer exceeds a predetermined entry interval determination time (this entry interval determination time corresponds to the above reference value A and is provided as a relatively short time period, for example, approximately 500 to 1000 ms) since a start of counting the timer, on the other hand, the control device 85 resets the timer (resets the value on the timer to 0) at step S202 and then proceeds to step S203.

At subsequent step S203, the control device 85 determines whether the value on the timer is equal to 0. This determines whether the entry is a first entry to the image non-display portion or is an entry to the image non-display portion after the above entry interval determination time has elapsed since a previous entry to the image non-display portion (after the timer is reset at step S202).

In the case of an affirmative answer at step S203, the control device 85 proceeds to step S204 to store (save) the entered coordinates (x, y) to the entry detection sensor 81 into a predetermined area in the RAM. The control device 85 subsequently starts the timer at step S205 and then terminates this process.

In the case of a negative answer at step S203, i.e., when there is another entry to the image non-display portion before the entry interval determination time has elapsed since a previous entry to the image non-display portion, on the other hand, the control device 85 proceeds to step S206.

At step S206, the entered coordinates to the entry detection sensor 81 are stored (saved) in the predetermined area in the RAM. At subsequent step S207, the control device 85 compares the coordinates stored at step S204 with the coordinates stored at step S206 and determines whether these two sets of coordinates are identical with each other or are approximate to each other. At step S206, for example, it is determined that the two sets of coordinates are identical with each other or are approximate to each other when a predetermined coordinate range is set about the coordinates stored at step S204 as the center and the coordinates stored at step S206 are included in this coordinate range.

In the case of a negative answer at step S207, i.e., when the two sets of entered coordinates are relatively away from each other, the control device 85 proceeds to step S211 to reset the timer and then terminates this process.

In the case of an affirmative answer at step S207, on the other hand, the control device 85 proceeds to step S208 to perform an operation panel image display process.

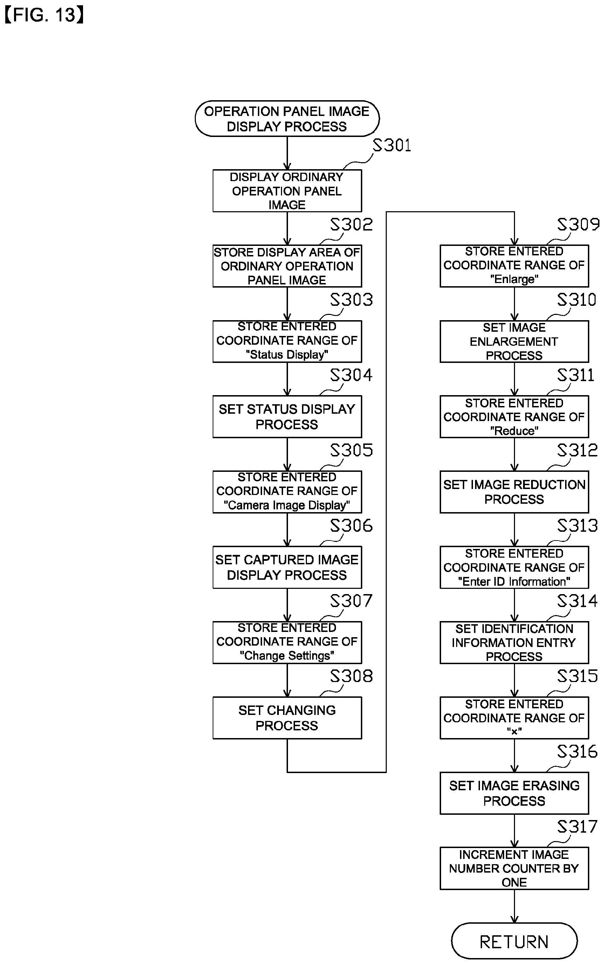

As shown in Fig. 13, in the operation panel image display process, the control device 85 first identifies coordinates on the liquid crystal panel 82 in a position overlapping with the coordinates stored at step S206 and causes the ordinary operation panel image CP1 to be displayed basically about the identified coordinates as the center on the liquid crystal panel 82 at step S301. When the ordinary operation panel image CP1 displayed about the identified coordinates as the center overlaps with any other image, however, the ordinary operation panel image CP1 is to be displayed in a position that does not overlap with any other image and is near to the identified coordinates.

Subsequently at step S302, the control device 85 stores a coordinate range (for example, (X1 to X2, Y1 to Y2)) on the liquid crystal panel 82 that indicates a display area of the ordinary operation panel image CP1, in relation to its image number in the image display area table (shown in Fig. 32) (the name of the image is additionally written in the field of the image number in Fig. 32 for the purpose of ease of understanding). A present value on an image number counter is used as the image number. The image number counter is provided as a loop counter that has an initial value set to 0 and is returned to the initial value of 0 after reaching an upper limit value (for example, 1000 or a higher value).

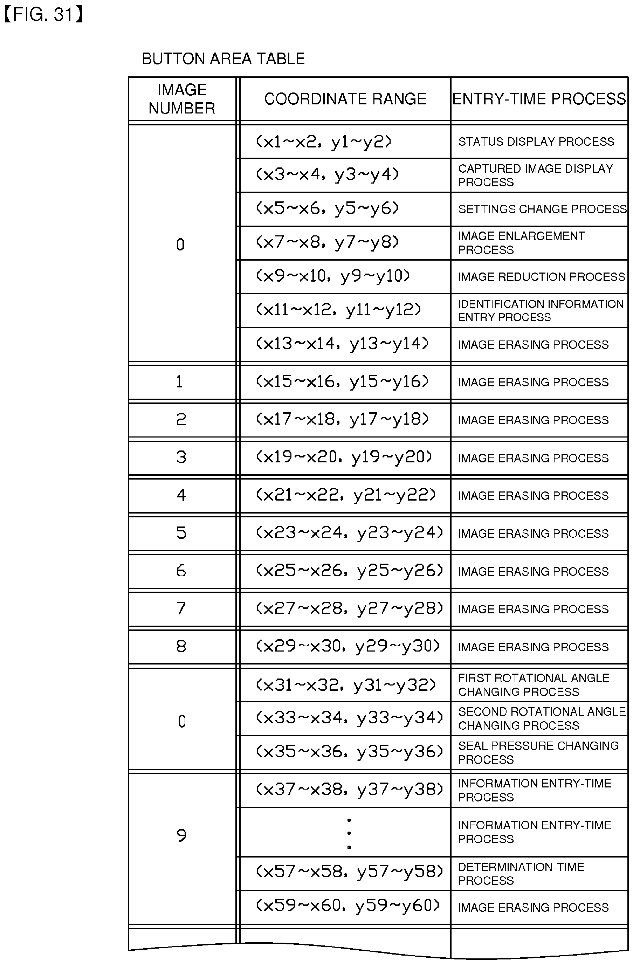

Subsequently at step S303, the control device 85 identifies a coordinate range (for example, (x1 to x2, y1 to y2)) of a portion on the entry detection sensor 81 that overlaps with the button area BS having the description of "Status Display" and stores the identified coordinate range in relation to its image number (present value on the image number counter) in a button area table (shown in Fig. 31). Additionally, at subsequent step S304, the control device 85 stores a process that is to be performed when there is an entry in the identified coordinate range (entry-time process) in relation to the identified coordinate range in the button area table. A status display process described later is stored at step S304 as the entry-time process.

Additionally, at subsequent step S305, the control device 85 identifies a coordinate range (for example, (x3 to x4, y3 to y4)) of a portion on the entry detection sensor 81 that overlaps with the button area BS having the description of "Camera Image Display" and stores the identified coordinate range in relation to its image number (present value on the image number counter) in the button area table. Subsequently at step S306, the control device 85 stores a captured image display process described later as the entry-time process, in relation to the identified coordinate range in the button area table.

At subsequent step S307, the control device 85 identifies a coordinate range (for example, (x5 to x6, y5 to y6)) of a portion on the entry detection sensor 81 that overlaps with the button area BS having the description of "Change Settings" and stores the identified coordinate range in relation to its image number (present value on the image number counter) in the button area table. Subsequently at step S308, the control device 85 stores a changing process described later as the entry-time process, in relation to the identified coordinate range in the button area table.

At subsequent step S309, the control device 85 identifies a coordinate range (for example, (x7 to x8, y7 to y8)) of a portion on the entry detection sensor 81 that overlaps with the button area BS having the description of "Enlarge" and stores the identified coordinate range in relation to its image number (present value on the image number counter) in the button area table. At subsequent step S310, the control device 85 stores an image enlargement process described later as the entry-time process, in relation to the identified coordinate range in the button area table.

Additionally, at subsequent step S311, the control device 85 identifies a coordinate range (for example, (x9 to x10, y9 to y10)) of a portion on the entry detection sensor 81 that overlaps with the button area BS having the description of "Reduce" and stores the identified coordinate range in relation to its image number (present value on the image number counter) in the button area table. After that, at subsequent step S312, the control device 85 stores an image reduction process described later as the entry-time process, in relation to the identified coordinate range in the button area table.

Additionally, at subsequent step S313, the control device 85 identifies a coordinate range (for example, (x11 to x12, y11 to y12)) of a portion on the entry detection sensor 81 that overlaps with the button area BS having the description of "Enter ID Information" and stores the identified coordinate range in relation to its image number (present value on the image number counter) in the button area table. At subsequent step S314, the control device 85 stores an identification information entry process described later as the entry-time process, in relation to the identified coordinate range in the button area table.

Additionally, at subsequent step S315, the control device 85 identifies a coordinate range (for example, (x13 to x14, y13 to y14)) of a portion on the entry detection sensor 81 that overlaps with the button area BS having the symbol "×" and stores the identified coordinate range in relation to its image number (present value on the image number counter) in the button area table. Subsequently at step S316, the control device 85 stores an image erasing process described later as the entry-time process, in relation to the identified coordinate range in the button area table.

The control device 85 finally increments the value of the image number counter by one at step S317 and then terminates the operation panel image display process. Performing the operation panel image display process causes the ordinary operation panel image CP1 to be displayed on the liquid crystal panel 82 and provides the settings for enabling each of various processes, for example, the status display process described above, to be performed by a contact or the like with each of the button areas BS in the ordinary operation panel image CP1.

Referring back to Fig. 12, the control device 85 preforms a remaining amount image display process at step S209, subsequent to the operation panel image display process of step S208.

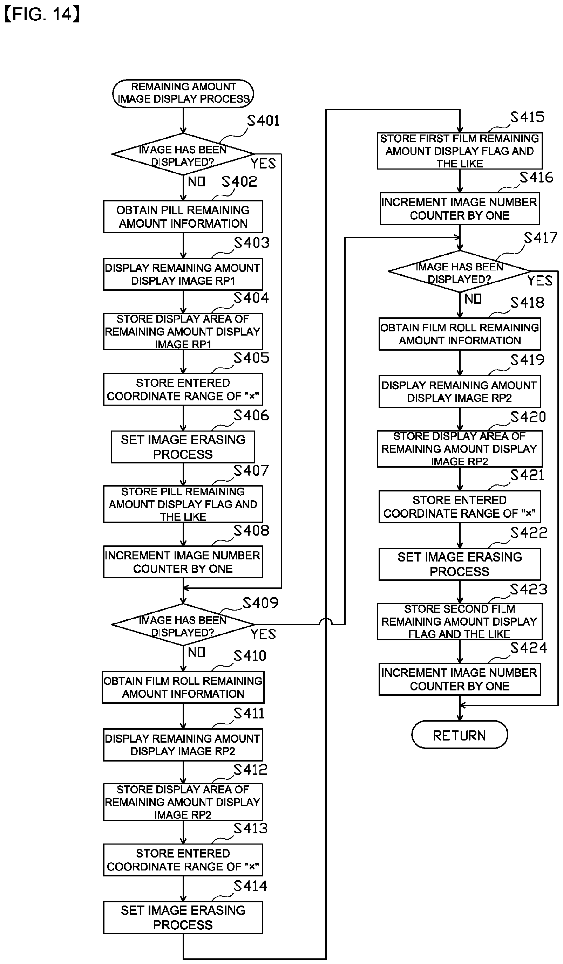

In the remaining amount image display process, as shown in Fig. 14, the control device 85 first determines whether an image has been displayed on the liquid crystal panel 82 in a position opposed to the pill packing device 22, based on the image display area table at step S401. This determination is based on determination of whether a coordinate range stored in the image display area table overlaps with a coordinate range on the liquid crystal panel 82 in the position opposed to the pill packing device 22 that is stored in advance in the control device 85.

In the case of an affirmative answer at step S401, i.e., when an image has already been displayed in the position opposed to the pill packing device 22, the control device 85 proceeds to step S409 while skipping various processes with regard to display and the like of the remaining amount display image RP1. In the case of a negative answer at step S401, i.e., when no image has been displayed in the position opposed to the pill packing device 22, on the other hand, the control device 85 proceeds to step S402.

At step S402, the control device 85 obtains information regarding the remaining amount of the pills 5 from the hard disk of the computer system 61. After that, at subsequent step S403, the control device 85 causes the remaining amount display image RP1 with a change on the basis of the obtained information to be displayed in the coordinate range on the liquid crystal panel 82 in the position opposed to the pill packing device 22. In the remaining amount display image RP1, the display color of each of the areas divided in the vertical direction is changed, based on the remaining amount of the pills 5. The remaining amount display image RP1 thus schematically indicates the rough remaining amount of the pills 5.

At subsequent step S404, the control device 85 stores a coordinate range (for example, (X3 to X4, Y3 to Y4)) indicating an area on the liquid crystal panel 82 in which the remaining amount display image RP1 is displayed, along with its image number (present value of the image number counter) in the image display area table.

Additionally, at step S405, the control device 85 identifies a coordinate range (for example, (x15 to x16, y15 to y16)) of a portion on the entry detection sensor 81 that overlaps with the button area BS having the symbol "×" in the remaining amount display image RP1 and stores the identified coordinate range in relation to its image number (present value on the image number counter) in the button area table. At subsequent step S406, the control device 85 stores the image erasing process described later as the entry-time process, in relation to the identified coordinate range in the button area table.

Subsequently at step S407, the control device 85 sets a pill remaining amount display flag ON and stores the image number (present value on the image number counter) in relation to the ON information of the pill remaining amount display flag. In other words, the image number indicating the remaining amount display image RP1 is related to the pill remaining amount display flag. The pill remaining amount display flag is set ON when the remaining amount display image RP1 is displayed on the liquid crystal panel 82 and is referred to in a process of determining whether an update process of the remaining amount display image RP1 is to be performed (step S105).

Additionally, at subsequent step S408, the control device 85 increments the value of the image number counter by one.

At subsequent step S409, the control device 85 determines whether an image has been displayed on the liquid crystal panel 82 in a position opposed to the film supply device 14, based on the image display area table. This determination is based on determination of whether a coordinate range stored in the image display area table overlaps with a coordinate range on the liquid crystal panel 82 in the position opposed to the film supply device 14 that is stored in advance in the control device 85.

In the case of an affirmative answer at step S409, i.e., when an image has already been displayed in the position opposed to the film supply device 14, the control device 85 proceeds to step S417. In the case of a negative answer at step S409, i.e., when no image has been displayed in the position opposed to the film supply device 14, on the other hand, the control device 85 proceeds to step S410.

At step S410, the control device 85 obtains information regarding the remaining amount of the film roll 13 from the hard disk of the computer system 61. After that, at subsequent step S411, the control device 85 causes the remaining amount display image RP2 with a change on the basis of the obtained information to be displayed in the coordinate range on the liquid crystal panel 82 in the position opposed to the film supply device 14. In the remaining amount display image RP2, the display color of each of the areas placed between the plurality of circles provided concentrically is changed, based on the remaining amount of the film roll 13. The remaining amount display image RP2 thus schematically indicates the rough remaining amount of the film roll 13.

Additionally, at subsequent step S412, the control device 85 stores a coordinate range (for example, (X5 to X6, Y5 to Y6)) indicating an area on the liquid crystal panel 82 in which the remaining amount display image RP2 is displayed, along with its image number (present value of the image number counter) in the image display area table.

After that, at step S413, the control device 85 identifies a coordinate range (for example, (x17 to x18, y17 to y18)) of a portion on the entry detection sensor 81 that overlaps with the button area BS having the symbol "×" in the remaining amount display image RP2 and stores the identified coordinate range in relation to its image number (present value on the image number counter) in the button area table. At subsequent step S414, the control device 85 stores the image erasing process described later as the entry-time process, in relation to the identified coordinate range in the button area table.

Subsequently at step S415, the control device 85 sets a first film remaining amount display flag ON and stores the image number (present value on the image number counter) in relation to the ON information of the first film remaining amount display flag. In other words, the image number of the remaining amount display image RP2 indicating the remaining amount of the film roll 13 is related to the first film remaining amount display flag. The first film remaining amount display flag is referred to in a process of determining whether an update process of the remaining amount display image RP2 with regard to the film roll 13 is to be performed (step S107).

After that, the control device 85 increments the value of the image number counter by one at step S416 and proceeds to step S417.

The control device 85 subsequently performs a series of processing of steps S417 to S424 with regard to the film roll 24 and the film supply device 25, which is similar to the series of processing of steps S409 to S416 described above with regard to the film roll 13 and the film supply device 14, and then terminates this process. The processing of steps S417 to S424 is similar to the processing of steps S409 to S416, so that the detailed description of steps S417 to S424 is omitted.

At step S419, the control device 85 causes the remaining amount display image RP2 to be displayed on the liquid crystal panel 82 in a position opposed to the film supply device 25. At step S423, the control device 85 sets a second film remaining amount display flag ON and stores the image number (present value on the image number counter) in relation to the ON information of the second film remaining amount display flag. In other words, the image number of the remaining amount display image RP2 indicating the remaining amount of the film roll 24 is related to the second film remaining amount display flag. The second film remaining amount display flag is referred to in a process of determining whether an update process of the remaining amount display image RP2 with regard to the film roll 24 is to be performed (step S109).

Referring back to Fig. 12, the control device 85 performs a degree image display process at step S210, subsequent to the remaining amount image display process of step S209.

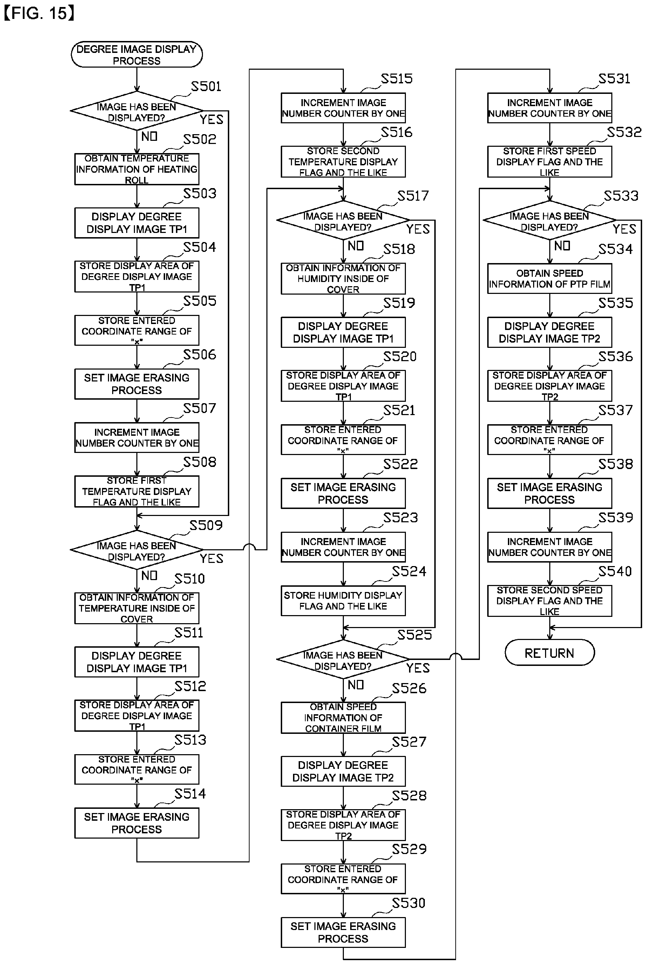

In the degree image display process, as shown in Fig. 15, the control device 85 first determines whether an image has already been displayed on the liquid crystal panel 82 in a predetermined display position of the degree display image TP1, based on the image display area table.

In the case of an affirmative answer at step S501, i.e., when an image has already been displayed, the control device 85 proceeds to step S509. In the case of a negative answer at step S501 (when no image has been displayed), on the other hand, the control device 85 proceeds to step S502.

At step S502, the control device 85 obtains latest information with regard to the temperature provided by the temperature sensor 48 (i.e., temperature of the heating roll 26) from the hard disk of the computer system 61. After that, at step S503, the control device 85 causes the degree display image TP1 with a change on the basis of the obtained information to be displayed in a predetermined position on the liquid crystal panel 82. In the degree display image TP1, the length of a portion at the center simulating a liquid column is changed, based on the obtained temperature information. The degree display image TP1 thus schematically illustrates the temperature of the heating roll 26.

Subsequently at step S504, the control device 85 stores a coordinate range (for example, (X9 to X10, Y9 to Y10) indicating an area on the liquid crystal panel 82 in which the degree display image TP1 is displayed, along with its image number (present value of the image number counter) in the image display area table.

Additionally, at step S505, the control device 85 identifies a coordinate range (for example, (x21 to x22, y21 to y22)) of a portion on the entry detection sensor 81 that overlaps with the button area BS having the symbol "×" in the degree display image TP1 and stores the identified coordinate range in relation to its image number (present value on the image number counter) in the button area table. At subsequent step S506, the control device 85 stores the image erasing process described later as the entry-time process, in relation to the identified coordinate range in the button area table.

Subsequently at step S507, the control device 85 increments the value of the image number counter by one. Additionally, at subsequent step S508, the control device 85 sets a first temperature display flag ON and stores the image number (present value on the image number counter) in relation to the ON information of the first temperature display flag. The first temperature display flag is referred to in a process of determining whether an update process of the degree display image TP1 with regard to the temperature of the heating roll 26 is to be performed (step S111).

The control device 85 subsequently performs a series of processing of steps S509 to S516 with regard to the temperature inside of the cover 71 (temperature information obtained by the temperature sensor 49), which is practically similar to the series of processing of steps S501 to S508 described above with regard to the temperature of the heating roll 26 (temperature information obtained by the temperature sensor 48). The detailed description of steps S509 to S516 is omitted.

The display position of the degree display image TP1 at step S511 is set in advance to a position that is different from the display position of the degree display image TP1 at step S503. At step S516, the control device 85 sets a second temperature display flag ON and stores the image number (present value on the image number counter) in relation to the ON information of the second temperature display flag. The second temperature display flag is referred to in a process of determining whether an update process of the degree display image TP1 with regard to the temperature inside of the cover 71 is to be performed (step S113).

The control device 85 subsequently performs a series of processing of steps S517 to S524 with regard to the humidity inside of the cover 71 (humidity information obtained by the humidity sensor 50), which is practically similar to the series of processing of steps S501 to S508 described above with regard to the temperature of the heating roll 26 (temperature information obtained by the temperature sensor 48). The detailed description of steps S517 to S524 is omitted.

The display position of the degree display image TP1 at step S519 is set in advance to a position that is different from both the display positions of the degree display images TP1 at step S503 and at step S511. At step S524, the control device 85 sets a humidity display flag ON and stores the image number (present value on the image number counter) in relation to the ON information of the temperature display flag. The humidity display flag is referred to in a process of determining whether an update process of the degree display image TP1 with regard to the temperature inside of the cover 71 is to be performed (step S115).

Subsequently at step S525, the control device 85 determines whether an image has already been displayed on the liquid crystal panel 82 in a predetermined display position of the degree display image TP2 indicating the speed of the container film 3, based on the image display area table.

In the case of an affirmative answer at step S525, i.e., when an image has already been displayed, the control device 85 proceeds to step S533. In the case of a negative answer at step S525, i.e., when no image has been displayed, on the other hand, the control device 85 proceeds to step S526.

At step S526, the control device 85 obtains latest information with regard to the speed of the container film 3 provided by the speed sensor 51 from the hard disk of the computer system 61. After that, at step S527, the control device 85 causes the degree display image TP2 with a change on the basis of the obtained information to be displayed in a predetermined position on the liquid crystal panel 82. In the degree display image TP2, the position of a portion simulating a needle is changed, based on the obtained speed information. The degree display image TP2 thus schematically illustrates the speed of the container film 3.

At subsequent step S528, the control device 85 stores a coordinate range (for example, (X15 to X16, Y15 to Y16) indicating an area on the liquid crystal panel 82 in which the degree display image TP2 is displayed, along with its image number (present value of the image number counter) in the image display area table.

Additionally, at step S529, the control device 85 identifies a coordinate range (for example, (x27 to x28, y27 to y28)) of a portion on the entry detection sensor 81 that overlaps with the button area BS having the symbol "×" in the degree display image TP2 and stores the identified coordinate range in relation to its image number (present value on the image number counter) in the button area table. At subsequent step S530, the control device 85 stores the image erasing process described later as the entry-time process, in relation to the identified coordinate range in the button area table.

Subsequently at step S531, the control device 85 increments the value of the image number counter by one. At subsequent step S532, the control device 85 sets a first speed display flag ON and stores the image number (present value on the image number counter) in relation to the ON information of the first speed display flag. The first speed display flag is referred to in a process of determining whether an update process of the degree display image TP2 with regard to the speed of the container film 3 is to be performed (step S117).

The control device 85 subsequently performs a series of processing of steps S533 to S540 with regard to the speed of the PTP film 6 (speed information obtained by the speed sensor 52), which is similar to the series of processing of steps S525 to S532 described above with regard to the speed of the container film 3 (speed information obtained by the speed sensor 51). The detailed description of steps S533 to S540 is omitted.

The display position of the degree display image TP2 at step S535 is set in advance to a position that is different from the display position of the degree display image TP2 at step S527. At step S540, the control device 85 sets a second speed display flag ON and stores the image number (present value on the image number counter) in relation to the ON information of the second speed display flag. The second speed display flag is referred to in a process of determining whether an update process of the degree display image TP2 with regard to the speed of the PTP film 6 is to be performed (step S119).

Referring back to Fig. 12, the control device 85 resets the timer at step S211 subsequent to the degree image display process of step S210 and then terminates the operation panel image and the like display process.

Referring back to Fig. 11, in the case of a negative answer at step S101 or after the processing of step S103 or the processing of step S104, the control device 85 proceeds to step S105. The processing of steps S105 to S124 is performed to update the information displayed in the image at regular intervals.

At step S105, the control device 85 determines whether the pill remaining amount display flag is ON. In the case of a negative answer at step S105, the control device 85 proceeds to step S107. In the case of an affirmative answer at step S105, i.e., when the remaining amount display image RP1 is displayed on the liquid crystal panel 82, on the other hand, the control device 85 performs an update process of the remaining amount display image RP1 at step S106 and then proceeds to step S107.

In the update process of the remaining amount display image RP1 at step S105, the control device 85 first identifies a coordinate range of the image as the object of update (remaining amount display image RP1) from the image display area table, based on the image number related to the pill remaining amount display flag. The control device 85 also obtains information with regard to the remaining amount of the pills 5 from the hard disk of the computer system 61. After that, the control device 85 causes the remaining amount display image RP1 with a change on the basis of the obtained information to be displayed at the same position as the identified coordinate range, such as to update the remaining amount display image RP1.

At step S107, the control device 85 determines whether the first film remaining amount display flag is ON. In the case of a negative answer at step S107, the control device 85 proceeds to step S109. In the case of an affirmative answer at step S107, i.e., when the remaining amount display image RP2 indicating the remaining amount of the film roll 13 is displayed on the liquid crystal panel 82, on the other hand, the control device 85 performs an update process of the remaining amount display image RP2 indicating the remaining amount of the film roll 13 at step S108 and then proceeds to step S109.

In the update process at step S108, the control device 85 first identifies a coordinate range of the image as the object of update from the image display area table, based on the image number related to the first film remaining amount display flag. The control device 85 also obtains latest information with regard to the remaining amount of the film roll 13 from the hard disk of the computer system 61. After that, the control device 85 causes the remaining amount display image RP2 with a change on the basis of the obtained information to be displayed at the same position as the identified coordinate range, such as to update the remaining amount display image RP2.

At step S109, the control device 85 determines whether the second film remaining amount display flag is ON. In the case of a negative answer at step S109, the control device 85 proceeds to step S111. In the case of an affirmative answer at step S109, i.e., when the remaining amount display image RP2 indicating the remaining amount of the film roll 24 is displayed on the liquid crystal panel 82, on the other hand, the control device 85 performs an update process of the remaining amount display image RP2 indicating the remaining amount of the film roll 24 at step S110.

The processing of step S110 is similar to the processing of step S108 with a change from the first film remaining amount display flag to the second film remaining amount display flag and a change from the film roll 13 to the film roll 24. The detailed description of the processing of step S110 is thus omitted.

At step S111, the control device 85 determines whether the first temperature display flag is ON. In the case of a negative answer at step S111, the control device 85 proceeds to step S113. In the case of an affirmative answer at step S111, i.e., when the degree display image TP1 indicating the temperature of the heating roll 26 is displayed on the liquid crystal panel 82, on the other hand, the control device 85 performs an update process of the degree display image TP1 at step S112 and then proceeds to step S113.

In the update process of step S112, the control device 85 first identifies a coordinate range of the image as the object of update from the image display area table, based on the image number related to the first temperature display flag. The control device 85 also obtains latest information with regard to the temperature of the heating roll 26 from the hard disk of the computer system 61. After that, the control device 85 causes the degree display image TP1 with a change on the basis of the obtained information to be displayed at the same position as the identified coordinate range, such as to update the degree display image TP1.

At step S113, the control device 85 determines whether the second temperature display flag is ON. In the case of a negative answer at step S113, the control device 85 proceeds to step S115. In the case of an affirmative answer at step S113, i.e., when the degree display image TP1 indicating the temperature inside of the cover 71 is displayed on the liquid crystal panel 82, on the other hand, the control device 85 performs an update process of the degree display image TP1 at step S114 and then proceeds to step S115.

The update process of step S114 is similar to the update process of step S112 with a change from the first temperature display flag to the second temperature display flag and a change from the heating roll 26 to inside of the cover 71. The detailed description of the update process of step S114 is thus omitted.

At subsequent step S115, the control device 85 determines whether the humidity display flag is ON. In the case of a negative answer at step S115, the control device 85 proceeds to step S117. In the case of an affirmative answer at step S115, i.e., when the degree display image TP1 indicating the humidity inside of the cover 71 is displayed on the liquid crystal panel 82, on the other hand, the control device 85 performs an update process of the degree display image TP1 at step S116.

The processing of step S116 is similar to the processing of step S112 with a change from the first temperature display flag to the humidity display flag and a change from the temperature of the heating roll 26 to the humidity inside of the cover 71. The detailed description of the processing of step S116 is thus omitted.

At step S117, the control device 85 determines whether the first speed display flag is ON. In the case of a negative answer at step S117, the control device 85 proceeds to step S119. In the case of an affirmative answer at step S117, i.e., when the degree display image TP2 indicating the speed of the container film 3 is displayed on the liquid crystal panel 82, on the other hand, the control device 85 performs an update process of the degree display image TP2 at step S118 and then proceeds to step S119.

In the update process of step S118, the control device 85 first identifies a coordinate range of the image as the object of update from the image display area table, based on the image number related to the first speed display flag. The control device 85 also obtains latest information with regard to the speed of the container film 3 from the hard disk of the computer system 61. After that, the control device 85 causes the degree display image TP2 with a change on the basis of the obtained information to be displayed at the same position as the identified coordinate range, such as to update the degree display image TP2.

At step S119, the control device 85 determines whether the second speed display flag is ON. In the case of a negative answer at step S119, the control device 85 proceeds to step S121. In the case of an affirmative answer at step S119, i.e., when the degree display image TP2 indicating the speed of the PTP film 6 is displayed on the liquid crystal panel 82, on the other hand, the control device 85 performs an update process of the degree display image TP2 at step S120 and then proceeds to step S121.

The update process of step S120 is similar to the update process of step S118 with a change from the first speed display flag to the second speed display flag and a change from the container film 3 to the PTP film 6. The detailed description of the update process of step S120 is thus omitted.

At step S121, the control device 85 determines whether a status display flag is ON. The status display flag is used to determine whether information with regard to the status display image JP displayed in the display field DS is to be updated and is set ON when the status display image JP is displayed. In the case of a negative answer at step S121, the control device 85 proceeds to step S123. In the case of an affirmative answer at step S121, i.e., when the status display image JP is displayed in the display field DS, on the other hand, the control device 85 proceeds to step S122 to perform a process of updating the information in the display field DS and then proceeds to step S123.

In the update process of step S122, the control device 85 first obtains an image number of an image as the object of the update process, based on the image number related to the status display flag. The image number of the operation panel image CP is obtained here. The control device 85 also obtains information with regard to, for example, the remaining amount of the pills 5, the remaining amounts of the film rolls 13 and 24, the temperature of the heating roll 26 and the temperature inside of the cover 71, from the hard disk of the computer system 61. After that, the control device 85 causes the status display image JP with a change on the basis of the obtained information to be displayed in the display field DS of the operation panel image CP that is identified by the obtained image number, such as to update the information in the display field DS.

At step S123, the control device 85 determines whether a captured image flag is ON. The captured image flag is used to determine whether a captured image that is taken by the inspection camera 55 or 56 and is displayed in the display field DS is to be updated and is set ON when a captured image is displayed. In the case of a negative answer at step S123, the control device 85 terminates this process. In the case of an affirmative answer at step S123, on the other hand, the control device 85 performs a process of updating the captured image in the display field DS at step S124 and then terminates this process.

In the process of step S124, the control device 85 first obtains an image number of an image as the object of the update process, based on the image number related to the captured image flag. The image number of the operation panel image CP is obtained here. The control device 85 also obtains latest captured image data among captured image data taken by the inspection cameras 55 and 56, from the hard disk of the computer system 61. After that, the control device 85 causes an obtained latest captured image to be displayed in the display field DS of the operation panel image CP that is identified by the obtained image number, such as to update the captured image in the display field DS. This embodiment is configured such that the displayed captured image is to be updated every time a predetermined time period has elapsed. A modified configuration may update the displayed captured image only when a new captured image is obtained.

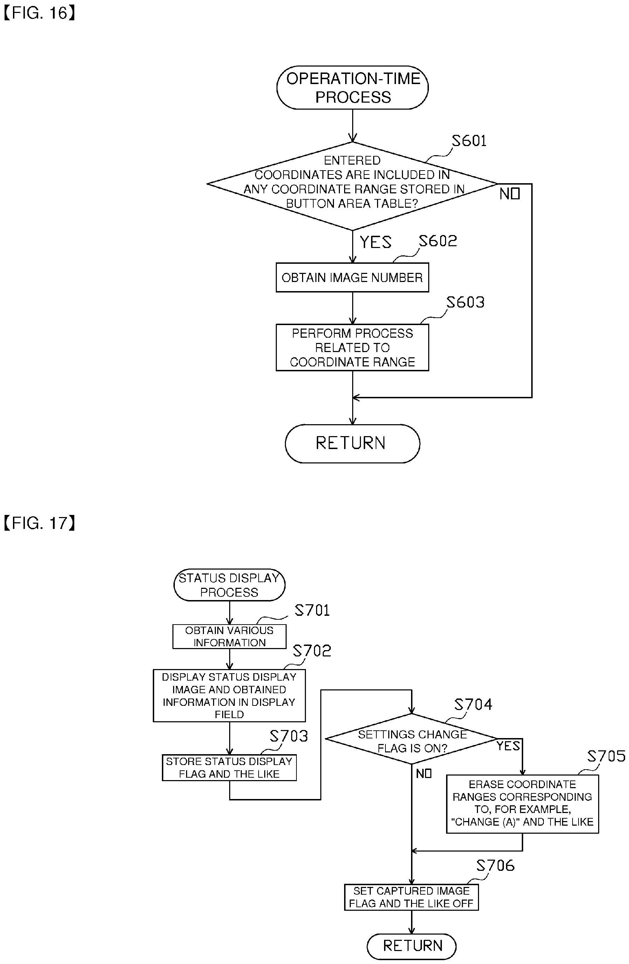

The following describes the operation-time process at step S103 in the ordinary process. The operation-time process is performed when there is an entry to an image display portion. As shown in Fig. 16, in the operation-time process, the control device 85 first refers to the button area table and determines whether the entered coordinates to the entry detection sensor 81 are included in any of the coordinate ranges stored in the button area table at step S601. In the case of a negative answer at step S601, the control device 85 terminates this process.

In the case of an affirmative answer at step S601, on the other hand, the control device 85 proceeds to step S602 to refer to the button area table and obtain an image number related to the coordinate range that is determined to include the entered coordinates at step S601. Subsequently at step S603, the control device 85 refers to the button area table and performs an entry-time process related to the coordinate range that is determined to include the entered coordinates at step S601. The control device 85 then terminates this process.

The entry-time process includes the status display process, the captured image display process, the changing process, the image enlargement process, the image reduction process, the identification information entry process, an information entry-time process, a determination-time process, a first rotational angle changing process, a second rotational angle changing process, a seal pressure changing process and the image erasing process. These processes are sequentially described below.

The status display process is described first. In the status display process, as shown in Fig. 17, at step S701, the control device 85 first obtains latest information with regard to the remaining amount of the pills 5, the remaining amounts of the film rolls 13 and 24, the temperature of the heating roll 26, the temperature and the humidity inside of the cover 71, the speed of the container film 3 and the speed of the PTP film 6, from the hard disk of the computer system 61.

Subsequently at step S702, the control device 85 causes the status display image JP to be displayed in the display field DS of the image represented by the image number identified at step S602 (operation panel image CP) and also causes the obtained information to be displayed in predetermined areas of the status display image JP (areas with dotted pattern shown in Fig. 7). As a result, the status display image JP and the various information are displayed in the display field DS.

After that, at step S703, the control device 85 sets the status display flag ON and stores the image number obtained at step S602 in relation to the ON information of the status display flag.

Additionally, at step S704, the control device 85 determines whether a settings change flag is ON. In the case of a negative answer at step S704, the control device 85 proceeds to step S706. In the case of an affirmative answer at step S705, i.e., when the settings change image EP is displayed in the display field DS prior to display of the status display image JP, on the other hand, the control device 85 proceeds to step S705 to erase the coordinate ranges corresponding to the button areas BS with the descriptions of "Change (A)", "Change (B)" and "Change (C)" and the entry-time processes related to these coordinate ranges from the button area table. These coordinate ranges and the entry-time processes are set in the changing process described later.

The control device 85 sets the captured image flag and the settings change flag OFF at subsequent step S706 and then terminates the status display process. The settings change flag is set ON when the settings change image EP is displayed in the display field DS.

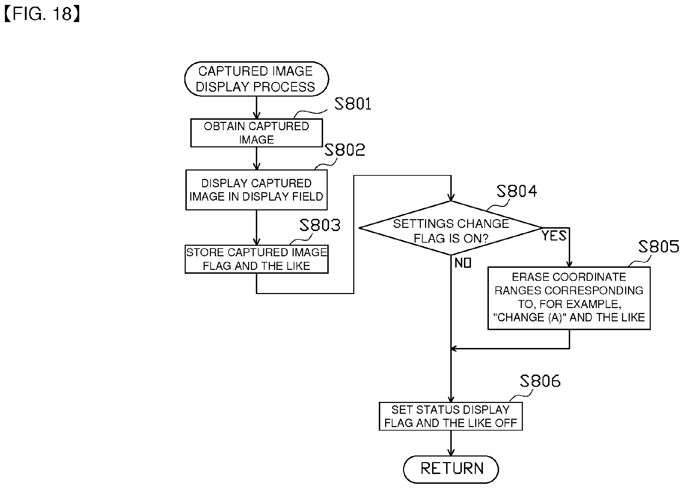

Subsequently the captured image display process is described below. In the captured image display process, as shown in Fig. 18, the control device 85 first obtains latest captured image data among captured image data taken by the inspection cameras 55 and 56, from the hard disk of the computer system 61 at step S801.

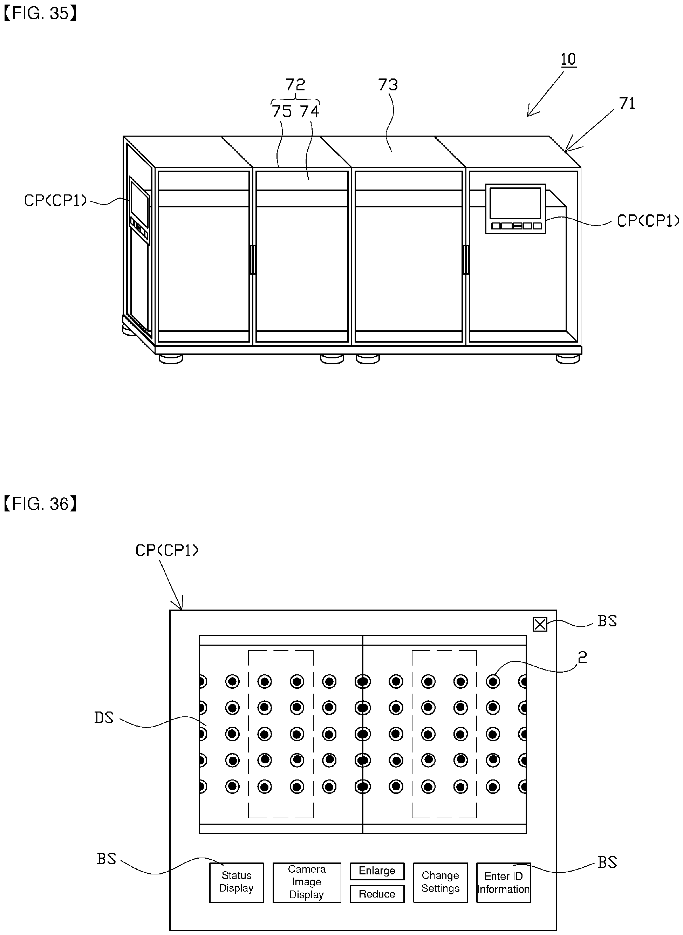

Subsequently at step S802, the control device 85 causes captured images based on the obtained data to be displayed side by side in the display field DS of the image represented by the image number identified at step S602 (operation panel image CP) (as shown in Fig. 36). After that, at step S803, the control device 85 sets the captured image flag ON and stores the image number obtained at step S602 in relation to the ON information of the captured image flag.

Additionally, at subsequent step S804, the control device 85 determines whether the settings change flag is ON. In the case of a negative answer at step S804, the control device 85 proceeds to step S806. In the case of an affirmative answer at step S804, on the other hand, the control device 85 proceeds to step S805 to perform the same processing as that of step S705 described above and subsequently proceeds to step S806.

The control device 85 sets the status display flag and the settings change flag OFF at step S806 and then terminates the captured image display process.

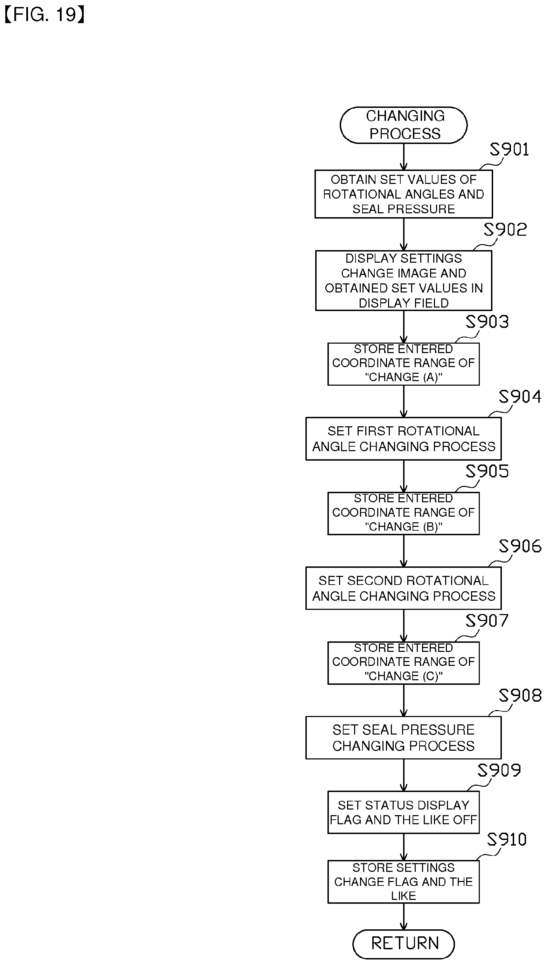

Subsequently the changing process is described below. In the changing process, as shown in Fig. 19, the control device 85 first obtains set values with respect to rotational angles per operation of the motors 16A and 28A and a pressure (seal pressure) applied from the heating roll 26 to the film receiving roll 21, from the computer system 61 at step S901.

At subsequent step S902, the control device 85 causes the settings change image EP to be displayed in the display field DS of the image represented by the image number identified at step S602 (operation panel image CP) and also causes the obtained respective set values to be displayed in predetermined areas of the settings change image EP (areas with dotted pattern shown in Fig. 10).

Subsequently at step S903, the control device 85 stores an identified coordinate range (for example, (x31 to x32, y31 to y32)) on the entry detection sensor 81 that overlaps with the button area BS having the description of "Change (A)" in the settings change image EP, along with the image number identified at step S602 in the button area table. At subsequent step S904, the control device 85 stores a first rotational angle changing process described later as the entry-time process, in relation to the identified coordinate range in the button area table.

Additionally, at subsequent step S905, the control device 85 stores an identified coordinate range (for example, (x33 to x34, y33 to y34)) on the entry detection sensor 81 that overlaps with the button area BS having the description of "Change (B)" in the settings change image EP, along with the image number identified at step S602 in the button area table. At subsequent step S906, the control device 85 stores a second rotational angle changing process described later as the entry-time process, in relation to the identified coordinate range in the button area table.

Subsequently at step S907, the control device 85 stores an identified coordinate range (for example, (x35 to x36, y35 to y36) on the entry detection sensor 81 that overlaps with the button area BS having the description of "Change (C)" in the settings change image EP, along with the image number identified at step S602 in the button area table. At subsequent step S908, the control device 85 stores a seal pressure degree changing process described later as the entry-time process, in relation to the identified coordinate range in the button area table.

Subsequently at step S909, the control device 85 sets the status display flag and the captured image flag OFF.

The control device 85 finally sets the settings change flag ON and stores the image number obtained at step S602 in relation to the ON information of the settings change flag at step S910 and then terminates the changing process.

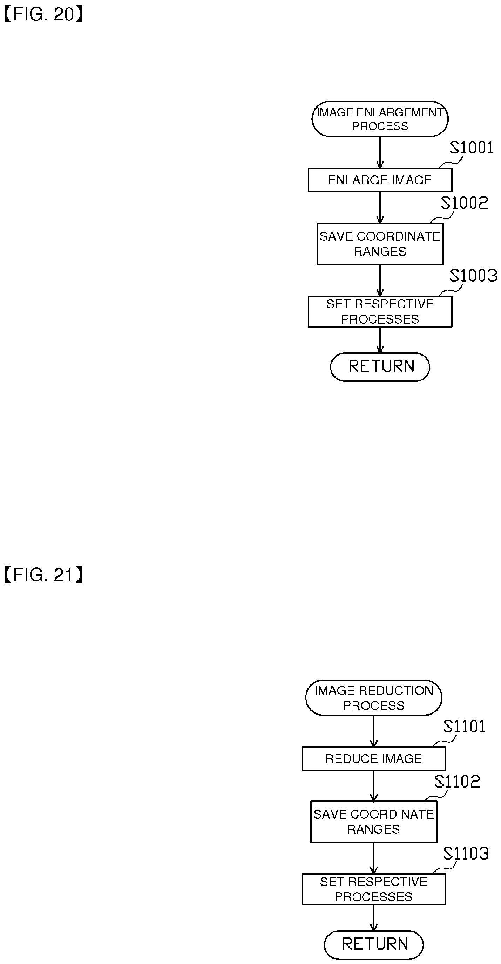

Subsequently the image enlargement process is described below. In the image enlargement process, as shown in Fig. 20, at step S1001, the control device 85 first enlarges a displayed image that is identified as the processing object at step S601 (operation panel image CP) by a predetermined magnification (for example, 1.25 times) with the center of the image as the base point, while maintaining the aspect ratio (i.e., ratio of the length in the Y direction to the length in the X direction) of the image identified as the processing object and the relative positional relationship of the field DS and the areas BS. When the length in the X direction or the length in the Y direction of the image as the processing object is greater than a predetermined value, the processing of steps S1001 to S1003 may be skipped.

After that, at subsequent step S1002, the control device 85 again identifies a coordinate range of a portion on the entry detection sensor 81 that overlaps with the display range of each button area BS and saves each of the identified coordinate ranges in relation to the image number of a corresponding image specified as the processing object, in the button area table. The control device 85 specifies settings again such that each of the respective processes corresponding to each of the button areas BS is performed when there is an entry to each of the saved coordinate ranges at subsequent step S1003 and then terminates the image enlargement process. At step S1003, for example, the status display process is saved as the entry-time process, in relation to the newly identified coordinate range of the entry detection sensor 81 in the position overlapping with the button area BS having the description of "Status Display", in the button area table.

Subsequently the image reduction process is described below. In the image reduction process, as shown in Fig. 21, at step S1101, the control device 85 first reduces a displayed image that is identified as the processing object at step S601 (operation panel image CP) by a predetermined magnification (for example, 0.8 times) with the center of the image as the base point, while maintaining the aspect ratio of the image identified as the processing object and the relative positional relationship of the field DS and the areas BS. When the length in the X direction or the length in the Y direction of the image as the processing object is less than a predetermined value, the processing of steps S1101 to S1103 may be skipped.

After that, at subsequent step S1102, the control device 85 again identifies a coordinate range of a portion on the entry detection sensor 81 that overlaps with the display range of each button area BS and saves each of the identified coordinate ranges in relation to the image number of a corresponding image specified as the processing object, in the button area table. The control device 85 specifies settings again such that each of the respective processes corresponding to each of the button areas BS is performed when there is an entry to each of the saved coordinate ranges at subsequent step S1103 and then terminates the image reduction process. At step S1103, for example, the captured image display process is saved as the entry-time process, in relation to the newly identified coordinate range of the entry detection sensor 81 in the position overlapping with the button area BS having the description of "Camera Image Display", in the button area table.

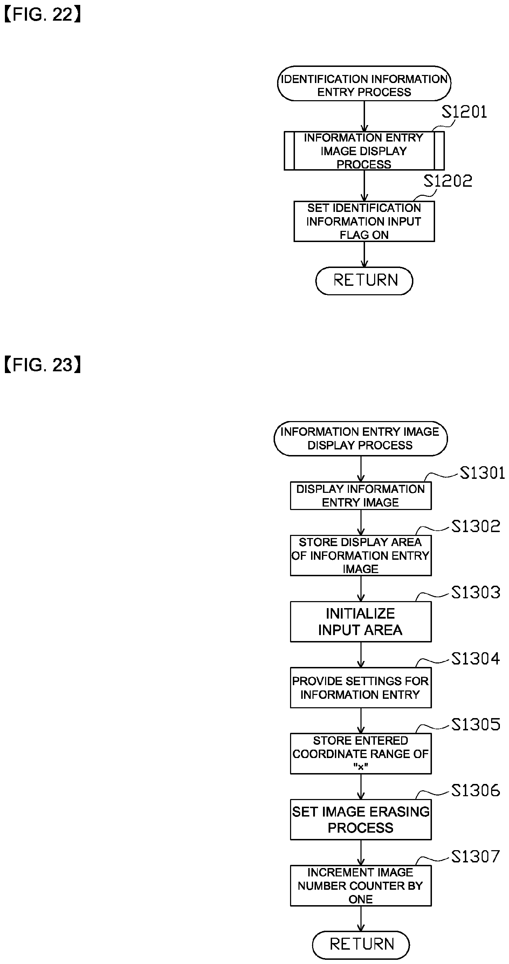

Subsequently the identification information entry process is described below. In this process, as shown in Fig. 22, the control device 85 first performs an information entry image display process at step S1201.

The information entry image display process is described below. In the information entry image display process, as shown in Fig. 23, at step S1301, the control device 85 first causes the information entry image IP to be displayed basically adjacent to the display position of the operation panel image CP. When any other image has already been displayed in an expected display position of the information entry image IP, however, the information entry image IP is to be displayed in a position that does not overlap with any other image. In this case, the display position of the information entry image IP is determined by referring to the image display area table.

At subsequent step S1302, the control device 85 stores a coordinate range (for example, (X19 to X20, Y19 to Y20)) on the liquid crystal panel 82 that indicates a display area of the information entry image IP, in relation to its image number (present value on the image number counter) in the image display area table.

Subsequently at step S1303, the control device 85 provides a predetermined input area in the RAM of the control device 85 and initializes the input area. One input area is provided corresponding to one information entry image IP. When a plurality of information entry images IP are displayed, one input area is provided corresponding to each of the information entry images IP.

Subsequently at step S1304, the control device 85 provides settings for information entry. Providing the settings for information entry first identifies a coordinate range of a portion on the entry detection sensor 81 that overlaps with the display range of each of the entry areas IS and the decision area KS and stores each of the identified coordinate ranges, in relation to its image number (present value on the image number counter) in the button area table. The control device 85 also stores an information entry-time process described later as the entry-time process, in relation to the identified coordinate range of the portion overlapping with each of the entry areas IS in the button area table. At step S1304, the control device 85 additionally stores a determination-time process described later as the entry-time process, in relation to a coordinate range (for example, (x57 to x58, y57 to y58)) of a portion overlapping with the decision area KS in the button area table.

Subsequently at step S1305, the control device 85 identifies a coordinate range of a portion on the entry detection sensor 81 that overlaps with the button area BS having the symbol "×" in the information entry image IP and stores the identified coordinate range (for example, (x59 to x60, y59 to y60)) in relation to its image number (present value on the image number counter) in the button area table. At subsequent step S1306, the control device 85 stores the image erasing process described later as the entry-time process, in relation to the identified coordinate range of the portion overlapping with the symbol "×" in the button area table.

The control device 85 finally increments the value of the image number counter by one at step S1307 and then terminates the information entry image display process.

Referring back to Fig. 22, subsequent to step S1201, the control device 85 sets an identification information input flag ON at step S1202. The identification information input flag is status determination information that is to be referred to in a determination-time process described later.

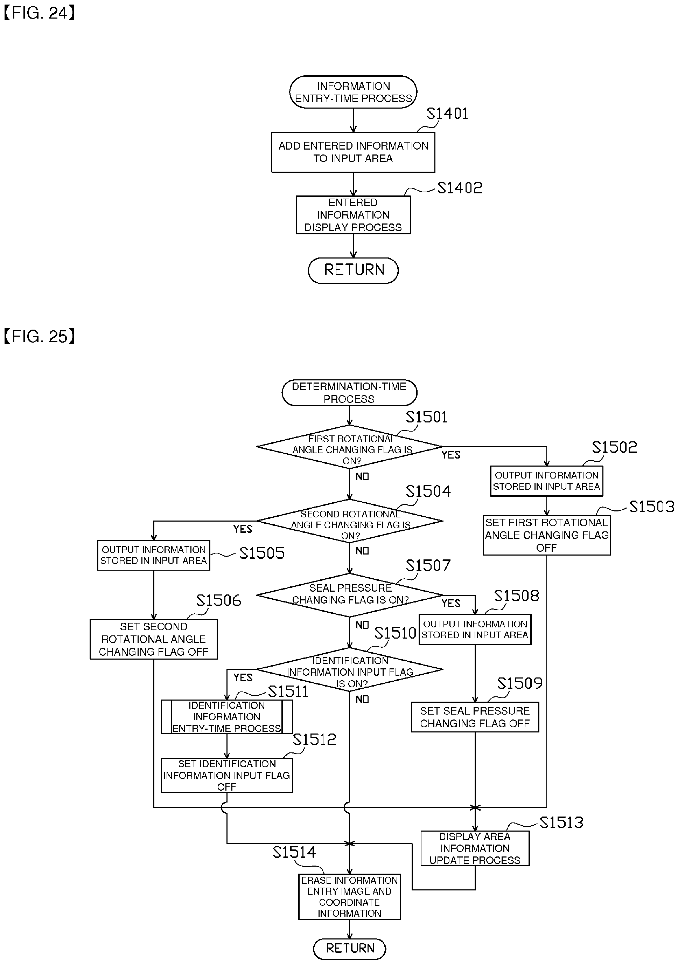

Subsequently the information entry-time process is described below. The information entry-time process is performed to enter a numerical value using the information entry image IP. In the information entry-time process, as shown in Fig. 24, at step S1401, the control device 85 first inputs (adds) a numerical value that is identical with the numerical value in an entry area IS in a position overlapping with entered coordinates, into the input area provided in the RAM of the control device 85. For example, when there is an entry to a coordinate range of a portion on the entry detection sensor 81 that overlaps with the entry area IS having the numerical symbol "1", a numerical value "1" is input into (added to) the above input area.

The control device 85 subsequently causes the numerical value in the above input area to be displayed in the entry display field IW of an image represented by the image number identified at step S602 (information entry image IP) at step S1402 and then terminates this process.

Subsequently the determination-time process is described below. The determination-time process is performed when there is an entry to a portion on the entry detection sensor 81 that overlaps with the decision area KS in the displayed information entry image IP. In the determination-time process, as shown in Fig. 25, the control device 85 first determines whether a first rotational angle changing flag is ON at step S1501. The first rotational angle changing flag is used to set an information update destination using the information stored in the input area to the rotational angle per operation of the motor 16A (first rotational angle).

In the case of an affirmative answer at step S1501, the control device 85 outputs a numerical value stored in the input area as a new first rotational angle to the computer system 61 at step S1502. The computer system 61 updates the first rotational angle with the input numerical value. The control device 85 sets the first rotational angle changing flag OFF at subsequent step S1503 and then proceeds to step S1513.

In the case of a negative answer at step S1501, on the other hand, the control device 85 proceeds to step S1504 to determine whether a second rotational angle changing flag is ON. The second rotational angle changing flag is used to set the information update destination using the information stored in the input area to the rotational angle per operation of the motor 28A (second rotational angle).

In the case of an affirmative answer at step S1504, the control device 85 outputs a numerical value stored in the input area as a new second rotational angle to the computer system 61 at step S1505. The computer system 61 specifies the input numerical value as the new second rotational angle. The computer system 61 also changes the rotational angle per operation of a motor that is driven to operate the intermittent feed roll 32 with the change of the second rotational angle.

The control device 85 subsequently sets the second rotational angle changing flag OFF at step S1506 and then proceeds to step S1513.

In the case of a negative answer at step S1504, on the other hand, the control device 85 proceeds to step S1507 to determine whether a seal pressure changing flag is ON. The seal pressure changing flag is used to set the information update destination using the information stored in the input area to the pressure applied from the heating roll 26 to the film receiving roll 21 (seal pressure).

In the case of an affirmative answer at step S1507, the control device 85 outputs a numerical value stored in the input area as a new seal pressure to the computer system 61 at step S1508. The computer system 61 specifies the input numerical value as the new seal pressure. The control program 85 subsequently sets the seal pressure changing flag OFF at step S1509 and then proceeds to step S1513.

In the case of a negative answer at step S1507, on the other hand, the control device 85 proceeds to step S1510 to determine whether the identification information input flag is ON. In the case of a negative answer at step S1510, the control device 85 proceeds to step S1514.

In the case of an affirmative answer at step S1501, on the other hand, the control device 85 proceeds to step S1511 to perform an identification information entry-time process.

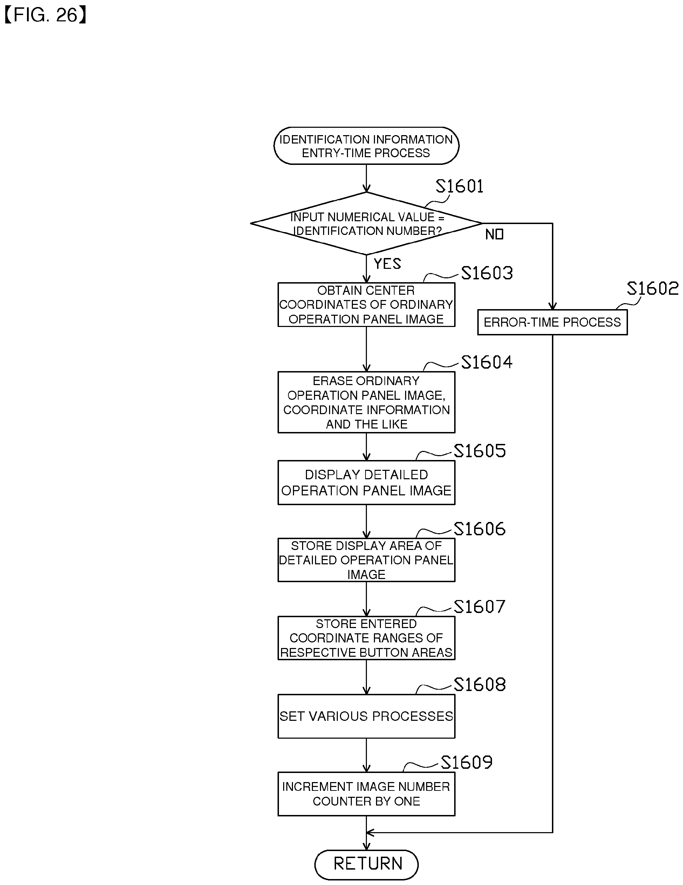

The identification information entry-time process is described below. In the identification information entry-time process, as shown in Fig. 26, the control device 85 first compares a numerical value stored in the input area (input numerical value) with an identification number stored in the identification number database of the control device 85 and determines whether the input numerical value is identical with the identification number (when a plurality of identification numbers are stored, whether the input numerical value is identical with any of the identification numbers) at step S1601. In the case of a negative answer at step S1601, the control device 85 performs an error-time process at step S1602 and then terminates this process. The error-time process is performed to notify the user that the input numerical value is wrong, for example, by displaying a predetermined error message in a position on the liquid crystal panel 82 that overlaps with the information entry image IP.

In the case of an affirmative answer at step S1601, i.e., when the input numerical value is correct, on the other hand, the control device 85 performs a process to display the detailed operation panel image CP2, in place of the ordinary operation panel image CP1.

More specifically, at step S1603, the control device 85 first refers to the image display area table and obtains center coordinates (X,Y) of the display area of the ordinary operation panel image CP1 from the coordinate range corresponding to the image number of the ordinary operation panel image CP1.

Subsequently at step S1604, the control device 85 erases the ordinary operation panel image CP1 from the liquid crystal panel 82 and also erases the coordinate information related to the erased ordinary operation panel image CP1 from the image display area table. The control device 85 additionally erases the respective coordinate information and the respective entry-time processes related to the image number of the erased ordinary operation panel image CP1 from the button area table.

At subsequent step S1605, the control device 85 displays the detailed operation panel image CP2 basically about the center coordinates obtained at step S1603 on the liquid crystal panel 82. When any other image has already been displayed in an expected display position of the detailed operation panel image CP2, however, the detailed operation panel image CP2 is to be displayed in a position that overlaps with the center coordinates and does not overlap with any other image.

Subsequently at step S1606, the control device 85 stores a coordinate range indicating the display area of the detailed operation panel image CP2 on the liquid crystal panel 82, in relation to its image number (present value on the image number counter) in the image display area table.

At subsequent step S1607, the control device 85 identifies a coordinate range of a portion on the entry detection sensor 81 that overlaps with each of the button areas BS in the detailed operation panel image CP2 and stores each of the identified coordinate ranges in relation to its image number (present value on the image number counter) in the button area table. Additionally, at subsequent step S1608, the control device 85 stores an entry-time process that is to be performed in response to an entry to each of the identified coordinate ranges in relation to each of the identified coordinate ranges in the button area table. The processing of steps S1607 and S1608 corresponds to the processing of steps S303 to S316 performed in the process of displaying the ordinary operation panel image CP1 described above.

The number of different entry-time processes set corresponding to the coordinate ranges of the respective button areas BS in the detailed operation panel image CP2 is greater than the number of different entry-time processes set corresponding to the coordinate ranges of the respective button areas BS in the ordinary operation panel image CP1. Displaying the detailed operation panel image CP2 thus allows for finer adjustment and the like with respect to a greater number of items in control of the manufacturing unit 11.

The control device 85 subsequently increments the value of the image number counter by one at step S1609 and then terminates the identification information entry-time process. Performing the processing of steps S1603 to S1608 causes the detailed operation panel image CP2 to be displayed on the liquid crystal panel 82 and provides the settings for enabling each of various processes to be performed by a contact or the like with a portion of the entry detection sensor 81 that overlaps with each of the button areas BS in the detailed operation panel image CP2.

Referring back to Fig. 25, the control device 85 sets the identification information input flag OFF at step S1512 subsequent to the identification information entry-time process and then proceeds to step S1514.

At step S1513 that is performed subsequent to steps S1503, S1506 and S1509, i.e., after outputting the numerical value stored in the input area, the control device 85 updates the set values displayed in the settings change image EP. More specifically, the control device 85 first obtains an image number of an image as an update process object (operation panel image CP), based on the image number related to the settings change flag. The control device 85 subsequently obtains the set values with respect to the rotational angles per operation of the motors 16A and 28A (first rotational angle and second rotational angle) and the pressure applied from the heating roll 26 to the film receiving roll 21 (seal pressure), from the hard disk of the computer system 61. After that, the control device 85 causes the settings change image EP with a change on the basis of the obtained set values to be displayed in the display field DS of the image represented by the obtained image number (operation panel image CP), such as to update the information in the display field DS.

Subsequent to step S1513, at step S1514, the control device 85 erases the information entry image IP from the liquid crystal pane 82 and also erases the coordinate information related to the erased information entry image IP from the image display area table. The control device 85 additionally erases the coordinate information and the entry-time process related to the image number of the erased information entry image IP from the button area table and then terminates the determination-time process.

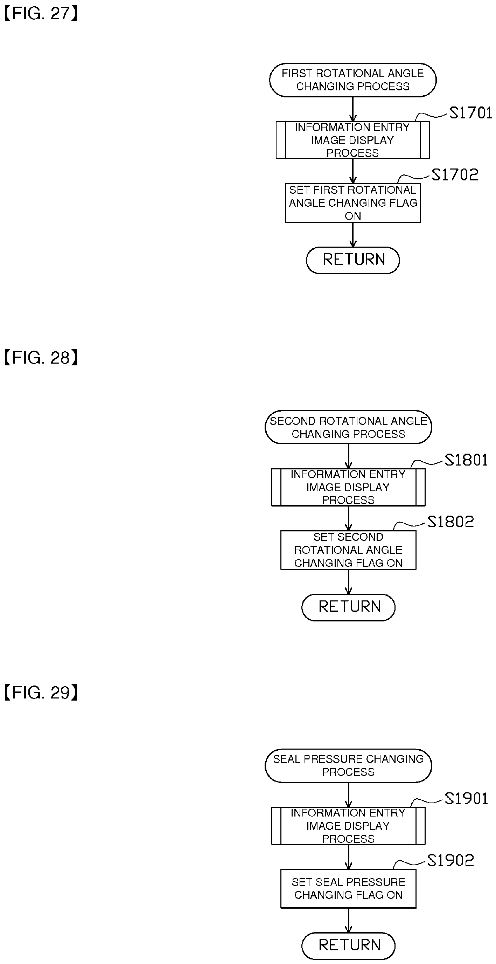

The following describes the first rotational angle changing process. In the first rotational angle changing process, as shown in Fig. 27, the control device 85 first performs the information entry image display process described above at step S1701. The control device 85 subsequently sets the first rotational angle changing flag ON at step S1702 and then terminates this process.

The following describes the second rotational angle changing process. In the second rotational angle changing process, as shown in Fig. 28, the control device 85 first performs the information entry image display process described above at step S1801. The control device 85 subsequently sets the second rotational angle changing flag ON at step S1802 and then terminates this process.

The following describes the seal pressure changing process. In the seal pressure changing process, as shown in Fig. 29, the control device 85 first performs the information entry image display process described above at step S1901. After that, the control device 85 sets the seal pressure changing flag ON at subsequent step S1902 and then terminates this process.

The first rotational angle changing process, the second rotational angle changing process and the seal pressure changing process are common in displaying the information entry image IP at a first step and setting the flag for determining the output destination of the numerical value stored in the input area at a next step.

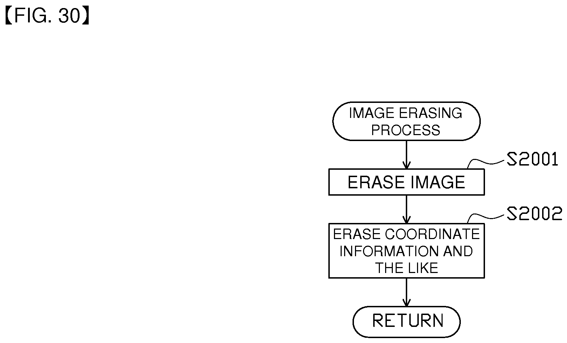

The following describes the image erasing process. In the image erasing process, as shown in Fig. 30, at step S2001, the control device 85 first erases the image represented by the image number identified at step S602. Subsequently at step S2002, the control device 85 erases the coordinate information related to the image number of the erased image from the image display area table. The control device 85 additionally erases the coordinate information and the entry-time process related to the image number of the erased image from the button area table and then terminates the image erasing process.

The following describes an appearance change of the cover 71 in response to the user's operation, in response to a change in the ambient environment or in response to an increase or decrease of the material.

When the user provides a predetermined entry (contact with or approach to an identical position or contact with or approach to an approximately identical position twice within a predetermined time period according to this embodiment) to a transparent portion of the cover 71 without display of any image, the operation panel image display process, the remaining amount image display process and the degree image display process described above are performed to generally display the ordinary operation panel image CP1, the remaining amount display images RP1 and RP2 and the degree display images TP1 and TP2 in transparent portions of the cover 71 as shown in Fig. 33. The remaining amount display image RP1 is displayed in the position opposed to the pill packing device 22. The remaining amount display images RP2 are displayed in the positions opposed to the film supply devices 14 and 25. The degree display images TP1 and TP2 are displayed in positions set in advance. When another image, for example, the ordinary operation panel image CP1 has been displayed in a position overlapping with an expected display position of any of these images RP1, RP2, TP1 and TP2, however, the image RP1, RP2, TP1 or TP2 that is expected to overlap with the displayed another image is not displayed.

Each of the displayed remaining amount display images RP1 and RP2 and the displayed degree display images TP1 and TP2 is updated at fixed time intervals and may thus be changed at every fixed time interval in response to a change in the ambient environment (temperature and humidity) with elapse of time or in response to an increase or decrease of the material (pills 5 or the film roll 13 or 24).

When the predetermined entry is provided again in a transparent portion of the cover 71 without display of any image, another ordinary operation panel image CP1 is displayed as shown in Fig. 34. The operation panel image CP may be displayed on any of a rear face and both side faces of the cover 71, as well as on the front face of the cover 71 (as shown in Fig. 35).

In response to the user's contact or the like with an area having the description of "Status Display" in the ordinary operation panel image CP1, the status display process described above is performed to display various information, for example, the remaining amount of the pills 5, the remaining amounts of the film rolls 13 and 24, the temperature of the heating roll 26 and the temperature and the humidity inside of the cover 71, along with the status display image JP, in the display field DS (as shown in Fig. 7).

In response to the user's contact or the like with an area having the description of "Camera Image Display" in the ordinary operation panel image CP1, the captured image display process described above is performed to display the captured images taken by the inspection cameras 55 and 56 in the display field DS as shown in Fig. 36. The configuration of this embodiment enables the user to grasp various information and check the captured image in any arbitrary location in the periphery of the cover 71. Each of the displayed various information and captured image is updated to the latest one at fixed time intervals.

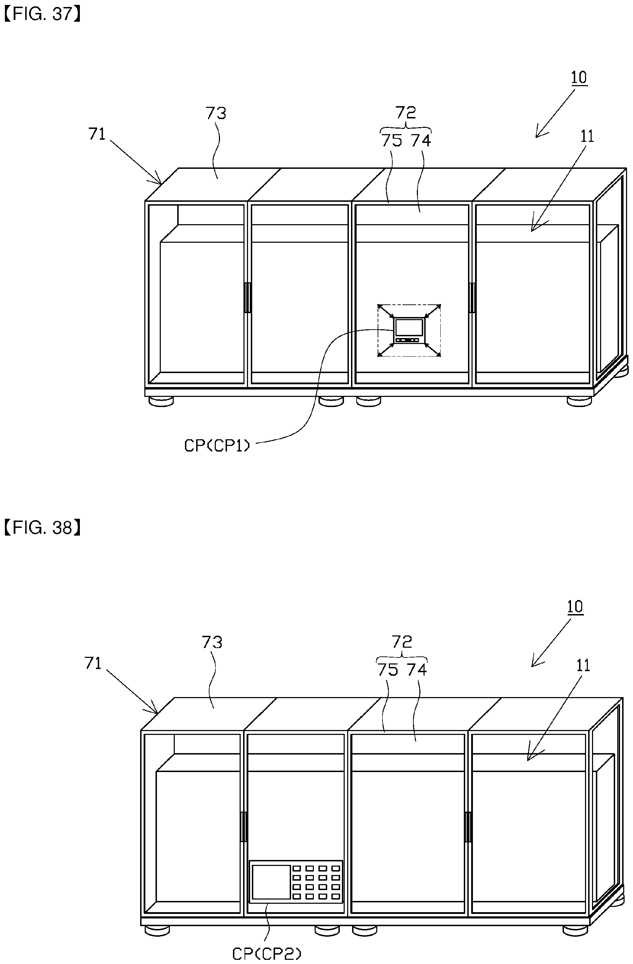

Additionally, in response to the user's contact or the like with an area having the description of "Enlarge" or "Reduce" in the ordinary operation panel image CP1, the image enlargement process or the image reduction process described above is performed to enlarge or reduce the displayed ordinary operation panel image CP1 as shown in Fig. 37 (the remaining amount display images RP1 and RP2 and the like are omitted from the illustrations of Fig. 37 and the like).

Furthermore, in response to the user's contact or the like with an area having the description of "Change Settings" in the ordinary operation panel image CP1, the changing process described above is performed to display the respective set values of the first rotational angle, the second rotational angle and the seal pressure at the time of the contact or the like, along with the settings change image EP in the display field DS (as shown in Fig. 10).

In response to the user's subsequent contact or the like with an area having the description of "Change (A)", the information entry image IP is displayed basically adjacent to the ordinary operation panel image CP1. In response to a contact or the like with one of the entry areas IS in the information entry image IP, the entered numerical value is added in the entry display field IW. In response to a contact or the like with the decision area KS, the information entry image IP is erased, and the numerical value displayed in the entry display field IW in the settings change image EP is displayed as the new set value of the first rotational angle.

In response to the user's contact or the like with an area having the description of "Change (B)", the information entry image IP is displayed in the same manner as described above. In response to a contact or the like with one of the entry areas IS in the information entry image IP and a subsequent contact or the like with the decision area KS, the information entry image IP is erased, and the numerical value displayed in the entry display field IW in the settings change image EP is displayed as the new set value of the second rotational angle.

In response to the user's contact or the like with an area having the description of "Change (C)", the information entry image IP is displayed in the same manner as described above. In response to a contact or the like with one of the entry areas IS in the information entry image IP and a subsequent contact or the like with the decision area KS, the information entry image IP is erased, and the numerical value displayed in the entry display field IW in the settings change image EP is displayed as the new set value of the seal pressure.

In response to a contact or the like with the decision area KS, the information of the numerical value displayed in the entry display field IW is output to the computer system 61, and this numerical value is specified as the new set value of the first rotational angle, the second rotational angle or the seal pressure.

Furthermore, in response to the user's contact or the like with an area having the description of "Enter ID Information", the information entry image IP is displayed. In response to a contact or the like with one of the entry areas IS in the information entry image IP and a subsequent contact or the like with the decision area KS, the information entry image IP is erased. When the entered numerical value is identical with the identification number, as shown in Fig. 38, the ordinary operation panel image CP1 is erased, and the detailed operation panel image CP2 is then displayed. When the entered numerical value is not identical with the identification number, on the other hand, for example, an error message may be displayed, and the ordinary operation panel image CP1 is continuously displayed.

Additionally, in response to the user's contact or the like with an area having the symbol "x" in each image, the image with this area is erased. For example, in response to the user's contact or the like with an area having the symbol "x" in the ordinary operation panel image CP1, the ordinary operation panel image CP1 is erased. In response to the user's contact or the like with an area having the symbol "x" in the remaining amount display image RP2, the remaining amount display image RP2 is erased. This configuration enables the user to erase any arbitrary image.

As described above in detail, according to this embodiment, the cover 71 is provided with the transparent or translucent cover main body 74, and the entry detection sensor 81 and the liquid crystal panel 82 provided in the cover main body 74 are generally formed by transparent or translucent thin films. This configuration accordingly causes the manufacturing unit 11 to be readily visible from outside through the cover main body 74, the entry detection sensor 81 and the like. As a result, this configuration enables the status of the manufacturing unit 11 to be appropriately checked and enhances the usability.

Additionally, the entry detection sensor 81 and the liquid crystal panel 82 are respectively provided as thin films and are thus not protruded from the surface of the cover. This configuration enhances the safety.

Furthermore, the configuration of this embodiment enables the ordinary operation panel image CP1 to be displayed at the user's desired arbitrary position in the area where the image is displayable on the liquid crystal panel 82. The entry detection sensor 81 is provided at the position where the ordinary operation panel image CP1 is displayed. This configuration thus enables information to be entered by a contact or the like with the entry detection sensor 81 that overlaps with the ordinary operation panel image CP1. As a result, this configuration enables control of the manufacturing unit 11 to be performed at various positions and thereby remarkably enhances the user's usability.

The configuration of the embodiment enables the operation panel image CP (the ordinary operation panel image CP1 and the detailed operation panel image CP2) to be displayed in multiple different positions. This configuration accordingly enables control of the manufacturing unit 11 to be performed simultaneously in the respective different positions and thereby further enhances the usability.

Furthermore, the configuration of this embodiment enables a different operation panel image CP to be displayed according to the identification information indicating the user's status or the like. This configuration accordingly ensures the better usability. This configuration also suppresses an erroneous change and the like in the manufacturing unit 11.

Additionally, the configuration of this embodiment enables the information with regard to the statuses of the manufacturing unit 11 and its periphery to be informed by the respective images RP1 and the like on the basis of the information obtained from the respective sensors 45 to 52. This accordingly ensures the further better usability.

The configuration of the embodiment also enables the remaining amount display images RP1 and RP2 to be displayed in the positions opposed to the pill packing device 22 and opposed to the film supply devices 14 and 25. This configuration enables the user to readily understand the correspondence relationship between the displayed remaining amount display images RP1 and RP2 and the pill packing device 22 and the film supply devices 14 and 25 and immediately grasp the remaining amounts of the materials in the pill packing device 22 and the film supply devices 14 and 25. As a result, this configuration further enhances the usability.

Additionally, the configuration of this embodiment enables the state inside of the cover 71 (state of the PTP sheet 1 in the middle of manufacture according to the embodiment) to be informed by the images obtained by the inspection cameras 55 and 56 without an access to inside of the cover 71. This configuration accordingly further enhances the usability and more reliably prevents invasion of foreign substances into the cover 71, thus enhancing the hygiene.

Furthermore, the illumination device 84 serves to illuminate the manufacturing unit 11, as well as serving to irradiate the liquid crystal panel 82 with light. This configuration does not need to separately provide means for irradiating the liquid crystal panel 82 with light and means for illuminating the manufacturing unit 11 and thereby achieves downsizing of the apparatus and reduction of various costs.

### [Second Embodiment]

The following describes a second embodiment with focusing on differences from the first embodiment described above.

The above first embodiment uses the liquid crystal panel 82 as the display unit and is configured such that various images are displayed on the cover 71 by irradiation of the liquid crystal panel 82 with light emitted from the illumination device 84 serving as the illumination unit.

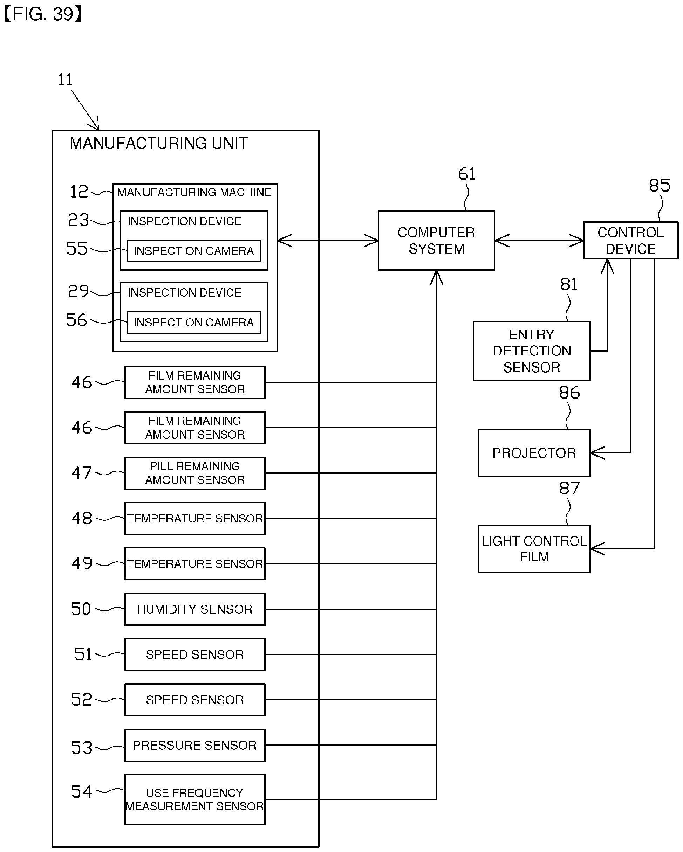

According to the second embodiment, on the other hand, as shown in Fig. 39, a projector 86 is provided as the display unit and the illumination unit, in place of the liquid crystal panel 82 and the illumination device 84. According to this embodiment, one projector 86 is provided in each of positions opposed to a front face, a rear face and both side faces of a cover 71.

The projector 86 includes, for example, a liquid crystal panel and a lamp serving as an illumination unit inside thereof and is configured to project and display an image on an outer surface of the cover 71. The projector 86 is movable up and down and from side to side and includes a head for light projection to change the irradiation direction of light. Additionally, the projector 86 serves to adjust the irradiation light and thereby form a projected image in a rectangular shape when a projection plane is obliquely irradiated with light emitted from the head. Furthermore the projector 86 is connected with a control device 85, so that the operation of the projector 86 is controlled by the control device 85.

The control device 85 is configured to control the light emitted from the projector 86 using image data of, for example, the above operation panel image CP stored in advance, and thereby display various images, for example, the operation panel image CP, the remaining amount display images RP1 and RP12 and the information entry image IP, on the cover 71.

The control device 85 is also configured to change the position on the cover 71 irradiated with light from the projector 86 and thereby change the display position of an image by operating the head for light projection.

Furthermore the control device 85 is configured to identify an area where an image is displayed by a coordinate range when the image is displayed on the cover 71. According to the second embodiment, the display area of the image is identified by the coordinate range using a virtual coordinate plane of panel main bodies 74 that are all arrayed as one plane with a vertical direction as an X-axis direction and a horizontal direction as a Y-axis direction. The control device 85 is also configured to identify coordinate ranges of button areas BS, entry areas IS or the like included in the image.

Even when an identical type of image is to be displayed, for example, the dimensions of the display area of the image may be varied according to the distance from the projector 86 to the cover 71 (projection plane) and the angle of the head for light projection. Predetermined relational expressions indicating the relationships of the distance from the projector 86 to the cover 71 (projection plane), the angle of the head for light projection and the type of an image to be displayed, to the display area of the image (coordinate range) are stored in advance in the ROM of the control device 85 or the like. The control device 85 is configured to accurately identify the display area of the image (i.e., the coordinate range) by using these relational expressions.

Additionally, according to the second embodiment, information with regard to a relative positional relationship between the coordinates in an entry detection sensor 81 and the coordinates in the panel main body 74 is stored in advance in the ROM of the control device 85 or the like. The control device 85 is configured to refer to the coordinates of the panel main body 74 and identify the coordinates of the entry detection sensor 81 in a position overlapping with the coordinates of the panel main body 74, based on the information with regard to the relative positional relationship.

Each of the panel main bodies 74 includes a light control film 87 in a thin film form on the surface thereof. The light control film 87 includes two resin transparent films with transparent conducting layers provided on surfaces thereof, an inner film placed between the two transparent films and provided by dispersing oriented particles (liquid crystal), and an electrode used to apply a voltage between the two transparent conducting layers. When no voltage is applied between the above transparent conducting layers, the oriented particles are arranged at random, so that light is diffused in the inner film. The light control film 87 accordingly becomes cloudy opaque white or gray color. When a voltage is applied between the above transparent electric layers, on the other hand, the oriented particles are aligned orderly, so that light goes straight without diffusion in the inner film. The light control film 87 accordingly becomes transparent or translucent.

The control device 85 serves to switch over between application and non-application of a voltage between the transparent conducting layers of the light control film 87. The control device 85 is configured to switch over between application and non-application of a voltage with respect to each light control film 87. Accordingly the control device 85 may apply a voltage to one or a plurality of light control films 87, such as to cause one or a plurality of panel main bodies 74 to become transparent, while not applying a voltage to the other light control films 87, such as to cause the other panel main bodies 74 to become opaque. This embodiment is configured to generally apply a voltage to all the light control films 87, such as to cause all the panel main bodies 74 to become transparent.

Various processes performed by the control device 85 according to the second embodiment are practically similar to the various processes performed by the control device 85 according to the first embodiment described above, except that an image is displayed using the projector 86 and the light control films 87.

A method of displaying an image according to the second embodiment is described. The control device 85 first stops application of a voltage to the light control film 87 of the panel main body 74 located at an expected display position of an image and causes the panel main body 74 located at the expected display position of the image to become opaque. The control device 85 subsequently controls the projector 86 to project light to the expected display position of the opaque panel main body 74 and thereby display an image.

Like the first embodiment described above, when an image is displayed, a coordinate range indicating a display area of the image is stored in the image display area table. When button areas BS, entry areas IS or the like are included in the displayed image, a coordinate range of a portion on the entry detection sensor 81 overlapping with each of the areas is stored in the button area table, and an entry-time process corresponding to each coordinate range is set.

The configuration of the second embodiment basically provides the similar functions and advantageous effects to those of the first embodiment described above. Accordingly the configuration of the second embodiment remarkably enhances the user's usability, while improving the safety and the like.

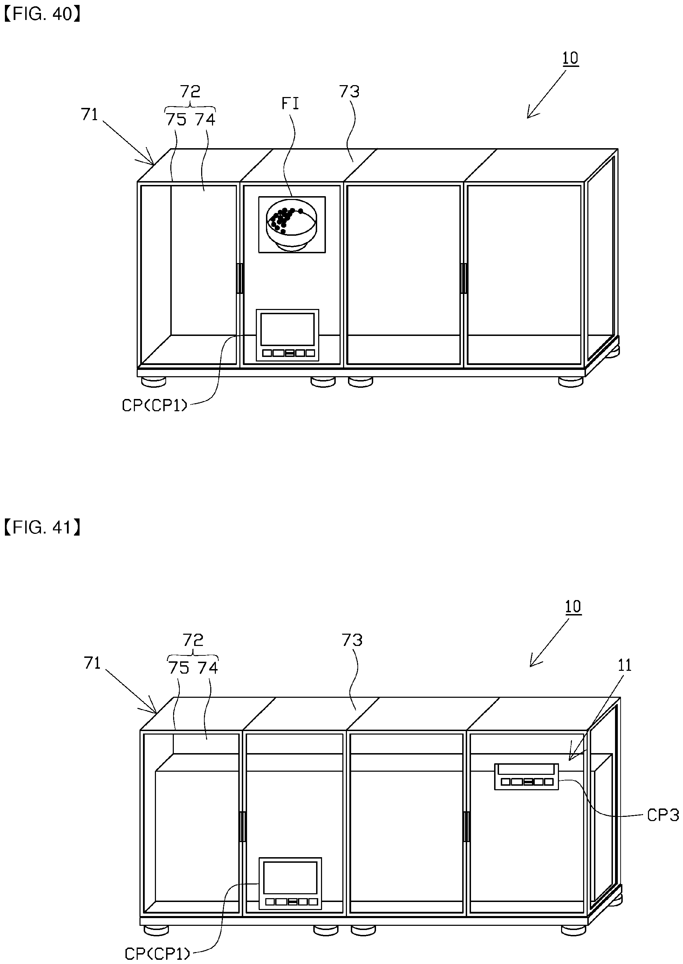

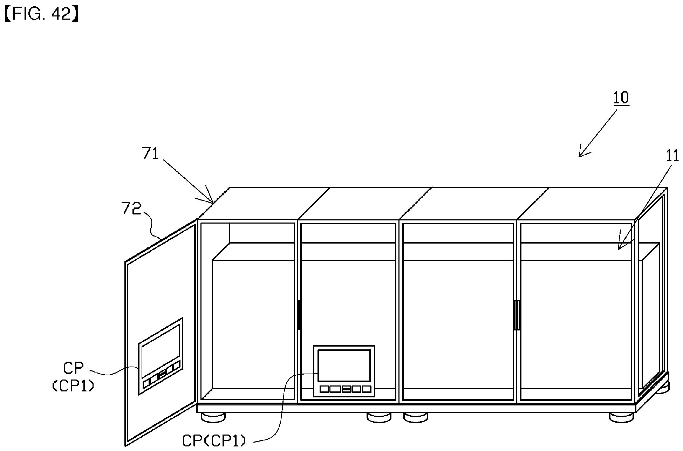

The disclosure is not limited to the descriptions of the above embodiments but may be implemented, for example, as described below. There are naturally other applications and modifications, in addition to those described below.
(a) The above embodiment is configured to additionally display the remaining amount display images RP1 and RP2 and the degree display images TP1 and TP2, together with the operation panel image CP (ordinary operation panel image CP1). It is, however, not necessarily required to display the remaining amount display images RP1 and RP2 and the degree display images TP1 and TP2 along with the operation panel image CP (ordinary operation panel image CP1). A modification may be configured to display the remaining amount display images RP1 and RP2 and the degree display images TP1 and TP2, in response to an entry to the entry detection sensor 81 after the display of the operation panel image CP (ordinary operation panel image CP1).
(b) The above embodiment is configured to display the operation panel image CP (ordinary operation panel image CP1) in response to a predetermined entry to the entry detection sensor 81 when no image is displayed. A modification may be configured to display images other than the operation panel image CP in response to a predetermined entry in a partial area or an entire area of the entry detection sensor 81. For example, a modification may be configured to display the remaining amount display image RP1 indicating the remaining amount of the pills 5 or the like, instead of the operation panel image CP, in response to a predetermined entry in a portion on the entry detection sensor 81 opposed to the pill packing device 22.
(c) The above embodiment is configured to include various sensors, for example, the film remaining amount sensors 45 and 46, the pill remaining amount sensor 47 and the temperature sensor 48. The types of sensors provided may be changed appropriately as needed. For example, a failure detection sensor configured to detect a failure or the like in each of various devices constituting the manufacturing machine 12, in addition to or in place of the various sensors described above. In a configuration that the air is flowed inside of the cover 71, a flow volume sensor may be provided to measure the flow volume (flow rate) of the air. The control device 85 may be configured to display an image indicating the occurrence of a failure in the cover 71 or an image indicating the flow volume, based on output information from, for example, the failure detection sensor or the flow volume sensor. The image indicating the occurrence of a failure may be displayed in a position opposed to a device where the failure is detected or its nearby position. This configuration enables the user to more readily recognize which of the devices has a failure, from outside of the cover 71.
(d) The above embodiment is configured to display an image in a position overlapping with the entry detection sensor 81. It is, however, not necessarily required to display a predetermined image (for example, an image simply indicating information (i.e., an image that is not used for entry)) in the position overlapping with the entry detection sensor 81. Such a predetermined image may be displayed in a position near to the entry detection sensor 81.
(e) According to the above embodiment, the manufacturing apparatus 10 includes the manufacturing machine 12 configured to manufacture the PTP sheet 1. The manufacturing machine is, however, not limited to this embodiment. The manufacturing machine may be, for example, a substrate manufacturing machine configured to manufacture substrates, a wound element manufacturing machine configured to manufacture a predetermined wound element (for example, lithium ion battery element) by winding an electrode or a separator in a belt-like shape, or a cosmetic manufacturing machine configured to manufacture cosmetic items. The present disclosure is especially effective for a manufacturing machine configured to manufacture products while conveying materials and the like. Such a manufacturing apparatus is likely to be relatively large (long) in size. In the stationary type or the movable type that the display unit and the input unit are stationary or movable, a relatively long time and a relatively heavy labor may be required for the user's move and approach to the display unit and the like when the user uses the display unit and the like. The configuration of the display unit and the like according to the above embodiment, however, effectively reduces the time and the labor for the move and thereby enhances the productivity.
(f) According to the above embodiment, the inspection cameras 55 and 56 are provided as the imaging unit with respect to the inspection devices 23 and 29. According to a modification, for example, a camera may be provided separately from an inspection device along the conveyance path of the container film 3 or the PTP film 6 to capture an image of the container film 3 or the PTP film 6. According to another modification, a camera may be provided to capture an image of a device or a material supply portion included in a manufacturing apparatus. For example, when the manufacturing machine is a substrate manufacturing machine configured to manufacture substrates as products, the camera may be provided to capture an image of a parts feeder configured to supply electronic parts. In another example, as shown in Fig. 40 (the manufacturing unit and the like inside of the cover 71 is not shown), a captured image FI taken by a camera may be displayed in real time on the cover 71.
(g) The above embodiment is configured to erase an image in response to an entry to the portion having the symbol "x". In order to prevent reduction of the visibility of the manufacturing unit 11 inside of the cover 71 by continuous display of an image, a modification may be configured to start timer counting at the time of display of an image or at the time of a last entry to a portion on the entry detection sensor 81 overlapping with the image and automatically erase the image when the measurement time of the timer exceeds a predetermined time period.
(h) The above embodiment is configured to enlarge and reduce the operation panel image CP (ordinary operation panel image CP1). A modification may be configured to enlarge and reduce another image.
   The above embodiment is configured to enlarge or reduce an image in response to an entry to a portion on the entry detection sensor 81 that overlaps with the button area BS of "Enlarge" or the button area BS of "Reduce". A modification may be configured to enlarge or reduce an image by another technique. For example, a modification may be configured to enlarge or reduce an image in response to an entry of a predetermined operation (for example, pinch-in operation or pinch-out operation) to a portion on the entry detection sensor 81 overlapping with the image.
(i) The above embodiment is configured to display two different types of images as the operation panel image CP (ordinary operation panel image CP1 and detailed operation panel image CP2). A modification may be configured to display only one type of image or three or more types of images. For example, a button area having a description such as "Simplified" may be provided in the operation panel image CP. A modification may be configured to display a simplified operation panel image CP3 including less information to be displayed than the ordinary operation panel image CP1 as shown in Fig. 41, in response to an entry to a portion on the entry detection sensor 81 overlapping with the button area.
(j) The above embodiment is configured to display an image on the outer surface of the cover 71. A modification may be configured to display an image on an inner surface of the cover 71. For example, as shown in Fig. 42, an image may be displayed on an inner surface of the panel plate 72 serving as a door.
(k) The above first embodiment is configured to irradiate the liquid crystal panel 82 through the light guide panel 83 with light from the illumination device 84. A modification may be configured to irradiate the liquid crystal panel 82 not through the light guide panel 83 or the like but directly with light from the illumination device 84. For example, an illumination device may be placed at a position opposed to the main body panel 74 inside of the cover 71 and may be configured to emit light from the illumination device to the liquid crystal panel 82.
   The position where the illumination device 84 is placed is not necessarily limited to inside of the cover 71 but may be outside of the cover 71.
(l) The above embodiment is configured to display images on the front face, the rear face and both the side faces of the cover 71. The image display range of the cover 71 is, however, not limited to this embodiment. For example, an image may be displayed only on the front face and both the side faces of the cover 71. In another example, an image may be displayed only on the front face of the cover 71.
(m) The above embodiment is configured to display an image on the entire transparent portion of the cover 71. A modification may be configured to display an image only in one region of the transparent portion.
(n) The above embodiment is configured to output the detected information from the respective sensors 45 to 54 to the control device 85 via the computer system 61. A modification may be configured to output the detected information directly from the respective sensors 45 to 54 to the control device 85.
(o) The above embodiment is configured to display the remaining amount display images RP1 and RP2 in the positions opposed to the pill packing device 22 and the film supply devices 14 and 25. The display positions of the remaining amount display images RP1 and RP2 are, however, not limited to this embodiment. For example, the remaining amount display images RP1 and RP2 may be displayed at positions near to the positions opposed to the pill packing device 22 and the film supply devices 14 and 25.
(p) The light control film 87 used in the above second embodiment may be replaced by a liquid crystal panel. The above second embodiment is configured to cause the entire panel main body 74 on which an image is displayed to become opaque when the image is to be displayed. A modification may be configured to cause only an image display portion of the panel main body 74 to become opaque.
(q) The projector 86 is provided outside of the cover 71 according to the second embodiment described above but may be provided inside of the cover 71.

### Reference Signs List

1... PTP sheet (product), 10... manufacturing apparatus, 11... manufacturing unit, 15... film supply device (supply portion), 22... pill packing device (supply portion), 25... film supply device (supply portion), 45, 46... film remaining amount sensors (status detector), 47... pill remaining amount sensor (status detector), 48, 49... temperature sensors (status detector), 50... humidity sensor (status detector), 51, 52... speed sensors (status detector), 53... pressure sensor (status detector), 54... use frequency measurement sensor (status detector), 55, 56... inspection cameras (imaging unit), 71... cover, 74... panel main body (see-through portion), 81... entry detection sensor (input unit), 82... liquid crystal panel (display unit), 84... illumination device (illumination unit), 85... control device (controller), 86... projector.

## Claims

1. A manufacturing apparatus comprising a manufacturing unit configured to manufacture a predetermined product and a cover configured to cover a circumference of the manufacturing unit, wherein the cover includes a see-through portion that is transparent or translucent and causes the manufacturing unit to be visible from outside, the manufacturing apparatus comprising:
an input unit that is provided as a transparent or translucent thin film, that occupies at least a predetermined area on a surface of the see-through portion and that is configured to detect an entry by a contact with or an approach to the predetermined area and output at least information regarding detection of the entry and information regarding a position where the entry is detected in the predetermined area;
a display unit that is formed by a transparent or translucent thin film, that is provided in at least one of a position in the see-through portion overlapping with the input unit and a nearby position thereof or provided in a position away from the cover, and that is configured to display a predetermined image using light emitted from a predetermined illumination unit in at least one of a position of the cover overlapping with the input unit and a nearby position thereof; and
a controller configured to obtain information input from the input unit and to control the display unit, wherein
in response to a predetermined entry to the input unit, the controller is configured to control the display unit such as to display the predetermined image in at least one of a position of the predetermined entry detected by the input unit and a nearby position thereof.

2. The manufacturing apparatus according to claim 1,
wherein the display unit is configured to display a predetermined operation panel image as the predetermined image in a position of the cover that overlaps with the input unit, and
the manufacturing unit is controlled according to a detection position of the predetermined entry in the operation panel image.

3. The manufacturing apparatus according to claim 2,
wherein in response to detection of the predetermined entry at multiple different positions by the input unit, the controller is configured to control the display unit such as to display the operation panel image in the respective different positions.

4. The manufacturing apparatus according to either claim 2 or claim 3,
wherein the controller is configured to obtain predetermined identification information input via the input unit, and
the controller is configured to control the display unit such as to display a different operation panel image according to the input identification information.

5. The manufacturing apparatus according to any one of claims 1 to 4, further comprising:
a status detector configured to detect a status with regard to at least one of the manufacturing unit and a periphery thereof and to output detected information to the controller, wherein
the controller is configured to control the display unit such as to display an image according to the information output from the status detector, as the predetermined image.

6. The manufacturing apparatus according to claim 5,
wherein the manufacturing unit comprises a supply portion configured to supply a material that is used to manufacture the product, wherein
the status detector is configured to detect a remaining amount of the material,
the display unit is configured to display the predetermined image in at least one of a position of the cover opposed to the supply portion and a nearby position thereof, and
the controller is configured to control the display unit such as to display the image according to the information output from the status detector in at least one of the position of the cover opposed to the supply portion and the nearby position thereof.

7. The manufacturing apparatus according to any one of claims 1 to 6, further comprising:
an imaging unit configured to capture an image inside of the cover and to output information with regard to the captured image to the controller, and
the controller is configured to control the display unit, such as to display the captured image as the predetermined image.

8. The manufacturing apparatus according to any one of claims 1 to 7,
wherein the display unit is configured by a transmission-type liquid crystal panel that is formed by a transparent or translucent thin film and is provided in at least one of a position of the see-through portion overlapping with the input unit and a nearby position thereof, and
the illumination unit emits light to the liquid crystal panel.

9. The manufacturing apparatus according to claim 8,
wherein the illumination unit is configured to additionally have a function of irradiating the manufacturing unit.

10. The manufacturing apparatus according to any one of claims 1 to 7,
wherein the display unit is configured by a projector that includes the illumination unit and is configured to project the predetermined image on the cover by light from the illumination unit, and
the projector is provided in a position away from the cover.

## Amended claims

### Amended claims under Art. 19.1 PCT

**1.** Currently Amended) A manufacturing apparatus comprising a manufacturing unit configured to manufacture a predetermined product and a cover configured to cover a circumference of the manufacturing unit, wherein the cover includes a see-through portion that is transparent or translucent and causes the manufacturing unit to be visible from outside, the manufacturing apparatus comprising:
an input unit that is provided as a transparent or translucent thin film, that occupies at least a predetermined area on a surface of the see-through portion and that is configured to detect an entry by a contact with or an approach to the predetermined area and output at least information regarding detection of the entry and information regarding a position where the entry is detected in the predetermined area;
a display unit that is formed by a transparent or translucent thin film, that is provided in at least one of a position in the see-through portion overlapping with the input unit and a nearby position thereof or provided in a position away from the cover, and that is configured to display a predetermined image using light emitted from a predetermined illumination unit in at least one of a position of the cover overlapping with the input unit and a nearby position thereof; and
a controller configured to obtain information input from the input unit and to control the display unit, wherein
in response to a predetermined entry to the input unit, the controller is configured to control the display unit such as to display the predetermined image in at least one of a position of the predetermined entry detected by the input unit and a nearby position thereof,
the display unit is configured to display a predetermined operation panel image as the predetermined image in a position of the cover that overlaps with the input unit, and
the manufacturing unit is controlled according to a detection position of the predetermined entry in the operation panel image, wherein
in response to detection of the predetermined entry at multiple different positions by the input unit, the controller is configured to control the display unit such as to display the operation panel image in the respective different positions.

**4.** Currently Amended) The manufacturing apparatus according to claim 1,
wherein the controller is configured to obtain predetermined identification information input via the input unit, and
the controller is configured to control the display unit such as to display a different operation panel image according to the input identification information.

**5.** The manufacturing apparatus according to any one of claims 1 to 4, further comprising:
a status detector configured to detect a status with regard to at least one of the manufacturing unit and a periphery thereof and to output detected information to the controller, wherein
the controller is configured to control the display unit such as to display an image according to the information output from the status detector, as the predetermined image.

**6.** The manufacturing apparatus according to claim 5,
wherein the manufacturing unit comprises a supply portion configured to supply a material that is used to manufacture the product, wherein
the status detector is configured to detect a remaining amount of the material,
the display unit is configured to display the predetermined image in at least one of a position of the cover opposed to the supply portion and a nearby position thereof, and
the controller is configured to control the display unit such as to display the image according to the information output from the status detector in at least one of the position of the cover opposed to the supply portion and the nearby position thereof.

**7.** The manufacturing apparatus according to any one of claims 1 to 6, further comprising:
an imaging unit configured to capture an image inside of the cover and to output information with regard to the captured image to the controller, and
the controller is configured to control the display unit, such as to display the captured image as the predetermined image.

**8.** The manufacturing apparatus according to any one of claims 1 to 7,
wherein the display unit is configured by a transmission-type liquid crystal panel that is formed by a transparent or translucent thin film and is provided in at least one of a position of the see-through portion overlapping with the input unit and a nearby position thereof, and
the illumination unit emits light to the liquid crystal panel.

**9.** The manufacturing apparatus according to claim 8,
wherein the illumination unit is configured to additionally have a function of irradiating the manufacturing unit.

**10.** The manufacturing apparatus according to any one of claims 1 to 7,
wherein the display unit is configured by a projector that includes the illumination unit and is configured to project the predetermined image on the cover by light from the illumination unit, and
the projector is provided in a position away from the cover.
